# EUROPÄISCHE PATENTANMELDUNG

(11) **EP 3 428 208 A1**
(43) Veröffentlichungstag der Anmeldung: **16.01.2019**
(21) Anmeldenummer: 17180472.7
(22) Anmeldetag: 10.07.2017
(51) Int. Cl.: C08G 18/24, C08G 18/76, C08G 18/62, C08F 290/06, C04B 26/16, C08K 5/00, C08K 5/3435, C04B 40/00, C08G 18/67

(54) **VERFAHREN ZUR HERSTELLUNG EINER TEMPOL-HALTIGEN URETHANHARZ-ZUSAMMENSETZUNG MIT LAGERSTABILITÄT**

(71) Anmelder: HILTI Aktiengesellschaft, 9494 Schaan (LI)
(72) Erfinder: Buder, Astrid, 86916 Kaufering (DE); Bürgel, Thomas, 86899 Landsberg (DE); Wieland, Philipp, 80935 München (DE); Dierker, Sascha, 86504 Merching (DE); Dölle, Robert, 86830 Schwabmünchen (DE); Bunzen, Jens, 86159 Augsburg (DE)
(74) Vertreter: Hilti Aktiengesellschaft Corporate Intellectual Property

(57) **Zusammenfassung**

Die vorliegende Erfindung betrifft ein Verfahren zur Herstellung einer Urethan(meth)acryiatharz-Zusammensetzung. Das Verfahren verbessert die Lagerstabilität und vermindert die Reaktivitätsdrift der Zusammensetzung im Vergleich zu Zusammensetzungen, welche auf anderem Wege aus denselben Ausgangsmaterialien hergestellt wurden. Insbesondere reduziert es den Abbau von TEMPOL in Mischungen mit verzweigten Urethanharzen.

## Beschreibung

Die vorliegende Erfindung betrifft ein Verfahren zur Herstellung einer Urethan(meth)acrylatharz-Zusammensetzung. Das Verfahren verbessert die Lagerstabilität und vermindert die Reaktivitätsdrift der Zusammensetzung im Vergleich zu Zusammensetzungen, welche auf anderem Wege aus denselben Ausgangsmaterialien hergestellt wurden. Insbesondere reduziert es den Abbau von TEMPOL in Mischungen mit verzweigten Urethanharzen.

Die Verwendung von chemischen Befestigungsmitteln auf Basis radikalisch härtbarer Harze ist seit langem bekannt. Im Bereich der Befestigungstechnik hat sich die Verwendung von Harzen als organisches Bindemittel für die chemische Befestigungstechnik, z.B. als Bestandteil einer Dübelmasse, durchgesetzt. Es handelt sich bei solchen Dübelmassen um Verbundmassen, die als Mehrkomponenten-Systeme konfektioniert sind, wobei eine Komponente (die Reaktivharzkomponente) das radikalisch härtbare Harz und die andere Komponente (die Härterkomponente) einen Initiator (für die Radikalbildung) enthält. Andere, übliche Bestandteile, wie beispielsweise Additive, Füllstoffe, Beschleuniger, Stabilisatoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als radikalisch härtbare Harze werden in konventionellen Reaktivharzkomponenten üblicherweise Vinylesterharze und insbesondere Vinylesterurethanharze eingesetzt, die durch Reaktion von monomeren, oligomeren oder polymeren aromatischen Diisocyanaten und Hydroxy-substituierten Methacrylaten, wie Hydroxyalkylmethacrylat, erhältlich sind. Die EP 0713015 B1 beispielsweise beschreibt Dübelmassen mit ungesättigten Polyesterharzen, Vinylesterharzen einschließlich Vinylesterurethanharzen als radikalisch härtbaren Harzen. Auch die DE 102011017626 B4 beschreibt Vinylesterurethanharze.

Die DE 4111828 A1 beschreibt ein übliches Verfahren zur Herstellung von Vinylesterurethanharzen für die chemische Befestigungstechnik. Bei dem Verfahren wird ein prepolymeres Diisocyanat auf Basis von 4,4'-Diphenylmethyldiisocyanat bei 50°C mit Hydroxypropylmethacrylat in Anwesenheit eines Katalysators umgesetzt. Nach Zugabe einer weiteren Menge an Katalysator wird das Reaktionsgemisch bei 70°C über zwei Stunden weitergerührt.

Werden sowohl die radikalisch härtbaren Harze als auch die daraus hergestellten Reaktivharzkomponenten gelagert, müssen Vorkehrungen getroffen werden, um eine vorzeitige Polymerisation der radikalisch härtbaren Harze, die sich häufig in einer Gelierung der Harze bzw. der diese enthaltenden Zusammensetzungen äußert, zu verhindern. Dies ist insbesondere wichtig bei nicht isolierten Harzen und diese enthaltenden Reaktivharzkomponenten, die weitere Bestandteile enthalten, welche einen Einfluss auf die Lagerstabilität haben können.

Neben der Lagerstabilität ist die Reaktivitätsdrift von Harz-Zusammensetzungen (wie z.B. von Reaktivharzen wie hierin definiert, aber auch von Reaktivharzen mit zusätzlichen anorganischen Füllstoffen, z.B. den Reaktivharzkomponenten wie hierin definiert) ein bekanntes Problem, das auftritt, wenn diese gelagert werden. Häufig wird beobachtet, dass sich die Harzreaktivität nach einer bestimmten Lagerzeit über einen längeren Zeitraum, wie etwa einen Zeitraum von etwa zwei Monaten, deutlich verändert hat. Diese Veränderung wird als Reaktivitätsdrift bezeichnet. In der Regel nimmt die Harzreaktivität während der Lagerung ab, was bedeutet, dass sich die Zeitspanne verkürzt, in der ein Reaktivharz oder eine Reaktivharzkomponente nach Zugabe des Initiators noch viskos und damit verarbeitbar bleibt. Die Reaktivitätsdrift wirkt sich unmittelbar auf die Verarbeitungszeit der Reaktivharze oder diese enthaltenden Massen aus, so dass die tatsächliche Verarbeitungszeit nicht mehr mit der ursprünglichen Verarbeitungszeit übereinstimmt. Die Verarbeitungszeit bei Zusammensetzungen mit einer Reaktivitätsdrift ist im Allgemeinen kürzer. Dies ist auf unterschiedliche Ursachen zurückzuführen, wie etwa die Reinheit der Edukte für die Synthese der radikalisch härtbaren Harze und/oder die Bestandteile der diese Harze enthaltenden Zusammensetzungen und daraus hergestellter Massen, welche untereinander wechselwirken oder miteinander reagieren können, sowie auf externe Einflüsse bei der Lagerung wie z.B. einen Abbau der üblicherweise in Reaktivharzen enthaltenen Inhibitoren durch erhöhte Temperaturen, Licht oder Oxidation.

Zur Stabilisierung gegen vorzeitige Polymerisation enthalten Zusammensetzungen, die radikalisch härtbare Harze enthalten und eine Lagerzeit überdauern müssen (also z.B. Reaktivharzkomponenten wie hierin definiert), üblicherweise Inhibitoren. Zur Stabilisierung gegen vorzeitige Polymerisation verwendete Inhibitoren werden in Fachkreisen auch als Stabilisatoren bezeichnet, währende Inhibitoren zur Verminderung einer Reaktivitätsdrift in Fachkreisen auch als Inhibitoren bezeichnet werden. Oft erfüllt ein und dieselbe Verbindung beide Funktionen, ist also sowohl Stabilisator zur Erhöhung der Lagerstabilität und Inhibitor der Reaktivitätsdrift.

Häufig verwendete Inhibitoren sind Hydrochinon, substituierte Hydrochinone, Phenothiazin, Benzochinon und *tert*-Butylbrenzkatechin, wie beispielsweise in der EP 1935860 A1 oder der EP 0965619 A1 beschrieben. Diese Inhibitoren verleihen einer Reaktivharzkomponente eine Lagerstabilität von mehreren Monaten, allerdings meist nur bei Lagerung unter Luftausschluss. Durch Luftsauerstoff werden sie oxidiert, was in verminderter Lagerstabilität und einer Reaktivitätsdrift resultieren kann.

Eine Stabilisierung von Reaktivharzkomponenten auf Basis radikalisch polymerisierbarer Harze konnte auch mit einer anderen Art von Inhibitoren, nämlich mit stabilen Nitroxylradikalen, auch *N*-Oxyl-Radikale genannt, etwa Piperidinyl-*N*-oxyl oder Tetrahydropyrrol-*N*-oxyl, erreicht werden, wie beispielsweise in der DE 19531649 A1 beschrieben. Aktuell wird daher häufig 4-Hydroxy-2,2,6,6-tetramethylpiperidin-*N*-oxyl (im Folgenden als TEMPOL bezeichnet) zur Stabilisierung verwendet, wenn eine Reaktivharzkomponente unter Luftausschluss gelagert wird. Einige der Nitroxylradikale, insbesondere TEMPOL, haben zudem die Eigenschaft, die Polymerisation nach der Zugabe des Initiators zu verzögern. Dies hat den Vorteil, dass damit auch die Harzreaktivität eingestellt werden kann. Ob diese Nitroxylradikale neben der Stabilisierung des radikalisch härtbaren Harzes auch dazu führen, dass sich die Harzreaktivität verändert, hängt von der Konzentration ab, in der diese eingesetzt werden.

Es ist bekannt, dass die Verwendung stabiler Nitroxylradikale vom Typ Piperidinyl-*N*-oxyl, wie TEMPOL, oder vom Typ Tetrahydropyrrol-*N*-oxyl bei Zusammensetzungen auf Basis von verzweigten Urethan(meth)acrylaten hergestellt aus polymerem Methylendiphenyldiisocyanat (pMDI) ein Problem darstellen kann. Das pMDI ist der Destillationssumpf aus der destillativen Reinigung von Methylendiphenyldiisocyanat (MDI) und enthält folglich viele Verunreinigungen. Anders als destilliertes MDI zeigt pMDI, wenn es mit TEMPOL gegen frühzeitige Polymerisation stabilisiert wird, eine verringerte Lagerstabilität, was zu einer Gelierung und im schlimmsten Fall zu einer Aushärtung des Harzes führt. Zusammensetzungen, welche ein aus pMDI hergestelltes Backbone-Harz enthalten und deren Reaktivität mit TEMPOL eingestellt wurde, zeigen zudem sehr bald eine Beeinträchtigung der eingestellten Reaktivität; es kommt zu einer unerwünschten Reaktivitätsdrift.

Unter anderem aus der EP 1716204 A1 und der EP 1716205 A1 ist bekannt, dass ungesättigte Polyesterharz- und Vinylesterharz-Zusammensetzungen eine nicht unerhebliche Reaktivitätsdrift, insbesondere nach längerer Lagerung aufweisen. Dementsprechend schlägt die EP 1716204 A1 ein Verfahren vor, mit dem ungesättigte Polyesterharz- oder Vinylesterharz-Zusammensetzungen bereitgestellt werden können, die verglichen mit den Zusammensetzungen, die nach den bis dahin bekannten Herstellungsverfahren erhältlich waren, eine deutlich geringere Reaktivitätsdrift aufweisen. Gemäß der EP 1716205 A1 kann neben einer aromatischen Aminoverbindung noch ein Nitroxylradikal zugegeben werden. Den genannten Schriften entnimmt der Fachmann, dass zum Erhalt einer ein ungesättigtes Polyesterharz oder Vinylesterharz enthaltenden Zusammensetzung mit geringer Reaktivitätsdrift die zur Einstellung der Harzreaktivität verwendeten bestimmten phenolischen Inhibitoren und aromatischen Aminoverbindungen in einer ganz bestimmten Reihenfolge dem Basisharz zugegeben werden müssen. Es wird für den Erfolg als entscheidend angesehen, dass zuerst durch Zugeben eines ganz bestimmten phenolischen Inhibitors eine ein ungesättigtes Polyesterharz oder Vinylesterharz enthaltende Primärzusammensetzung bereitgestellt wird, zu der dann eine aromatische Aminoverbindung und gegebenenfalls zusätzlich ein Nitroxylradikal gegeben wird. Nachteilig an den beschriebenen Zusammensetzungen ist, dass die Reaktivitäten nach Lagerung weiterhin in einem weiten Bereich streuen und die Reaktivitätsdrift entgegen den Angaben in diesen Schriften zum Teil doch noch recht hoch ist. Dementsprechend konnte auch durch die beschriebenen Verfahren das Problem der Lagerstabilität, insbesondere für Zusammensetzungen, die über einen Zeitraum von mehreren Monaten gelagert werden, nicht zufriedenstellend gelöst werden.

Unter anderem aus der DE 102011017626 A1, der WO 2013/156358 A1, der WO 2013/156356 A1 und der WO 2013/156360 A1 ist bekannt, dass ungesättigte Vinylesterharz-Zusammensetzungen auf Basis von polymerem Diphenylmethandiisocyanat (pMDI), die ein Nitroxylradikal als Polymerisationsstabilisator insbesondere zur Einstellung der Harzreaktivität enthalten, eine zum Teil recht erhebliche Reaktivitätsdrift aufweisen, insbesondere nach längerer Lagerung. Dementsprechend schlägt die DE 102011017626 A1 die Zugabe einer organischen Stickstoffbase oder eines Alkalimetallhydroxids, jeweils gelöst in einem Lösungsmittel, bei der Herstellung der Zusammensetzung vor. Die Zugabe kann dabei vor oder nach der Zugabe des stabilen Nitroxylradikals erfolgen. Hierdurch konnte zwar die gewünschte Lagerstabilität erreicht werden, jedoch führt die Zugabe der Base zu einer Erhöhung der Viskosität eines die entsprechende Zusammensetzung enthaltenden Mörtels und zu einer Verkürzung der Harzreaktivität. Ferner wurde beobachtet, dass bei längerer Lagerung starke Aushärtestörungen auftreten. Die Basenzugabe hat zudem einen negativen Einfluss auf die Herstellungskosten von auf diesem Wege hergestellten Zusammensetzungen.

Eine weitere Möglichkeit ist den WO 2013/156358 A1, WO 2013/156356 A2 und WO 2013/156360 A1 zu entnehmen, welche die Verwendung bestimmter Nitroxylradikale als Stabilisatoren vorschlagen. Gemäß der WO 2013/156358 A1 können Zusammensetzungen auf Basis radikalisch härtbarer Harze (wie beispielsweise Reaktivharzkomponenten) durch die Verwendung eines stabilen Indol-Nitroxidradikals als Stabilisator und/oder Inhibitor sehr effektiv lagerstabil gemacht und die Reaktivität von anorganisch gefüllten Reaktivharzkomponenten gezielt eingestellt werden. Einen ähnlichen Weg schlägt die WO 2013/156356 A1 vor, wonach Zusammensetzungen auf Basis radikalisch härtbarer Harze (wie beispielsweise Reaktivharzkomponenten) durch die Verwendung eines stabilen phosphorylierten Nitroxylradikals als Stabilisator und/oder Inhibitor sehr effektiv lagerstabil gemacht und die Reaktivität von anorganisch gefüllten Reaktivharzkomponenten gezielt eingestellt werden können. Zu diesem Zweck schlägt die WO 2013/156360 A1 eine Kombination aus mindestens einem stabilen Nitroxylradikal und mindestens einem Quinonmethid vor. Die beschriebenen Möglichkeiten haben jedoch den Nachteil, dass durch die Zugabe der nicht herkömmlichen Inhibitoren die Herstellkosten der Zusammensetzungen zum Teil deutlich erhöht werden. Außerdem wurde eine Unverträglichkeit von bestimmten Nitroxylradikalen mit Quinonmethiden beobachtet, die sich in einer Reduzierung der Lagerstabilität äußert und somit genau den Effekt hat, der durch die Verwendung von Quinonmethiden eigentlich vermieden werden soll.

Wie schon in der DE 4111828 A1 wird auch in der DE 102011017626 A1, der WO 2013/156356 A2, der WO 2013/156358 A1 und der WO 2013/156360 A1 beschrieben, dass polymeres Methylendiphenyldiisocyanat mit Hydroxypropylmethacrylat in Gegenwart eines Katalysators umgesetzt wird, wobei die Innentemperatur auf 85°C ansteigt.

Es besteht weiterhin Bedarf an auf pMDI basierenden Reaktivharzen, insbesondere an Reaktivharzkomponenten welche aufgrund ihrer geplanten Verwendung nicht sofort weiterverarbeitet sondern gelagert werden, wie beispielsweise für die chemische Befestigungstechnik, die eine verbesserte Lagerstabilität aufweisen und deren Reaktivität relativ stabil ist, d.h. deren Reaktivitätsdrift bzw. Gelzeitdrift reduziert ist und bevorzugt in einem sehr engen Bereich liegt, oder bei denen keine Reaktivitätsdrift bzw. Gelzeitdrift stattfindet.

Diese Aufgabe wird durch das Verfahren gemäß Anspruch 1 gelöst.

Die Erfinder der vorliegenden Erfindung konnten zeigen, dass überraschenderweise die Harzreaktivität (also die Zeit bis zur Aushärtung des Harzes nach Zugabe des Initiators) verlängert wird, wenn bei der Herstellung eines Reaktivharzes auf der Basis eines aus pMDI hergestellten Urethanmethacrylatharzes als Backbone-Harz der Zusatz von TEMPOL zeitlich bezogen auf den Zeitpunkt, zu dem die Reaktion zum Backbone-Harz abgeschlossen ist, nach hinten verlagert wird. Das TEMPOL wird also erfindungsgemäß nicht direkt nach Abschluss der Reaktion zum Backbone-Harz zugegeben, sondern erst in einem bestimmten Abstand nach diesem Zeitpunkt, beispielsweise erst nach mindestens 4 Stunden. Die durch die Erfindung erreichbare Verlängerung der Harzreaktivität hat den Vorteil, dass das Reaktivharz nach Zugabe des Initiators länger verarbeitbar bleibt.

Außerdem konnten die Erfinder zeigen, dass die Reaktivitätsdrift sowie die Gelzeitdrift verringert werden kann, wenn bei der Herstellung eines Reaktivharzes auf der Basis eines aus pMDI hergestellten Urethanmethacrylatharzes als Backbone-Harz der Zusatz von TEMPOL zeitlich bezogen auf den Zeitpunkt, zu dem die Reaktion zum Backbone-Harz abgeschlossen ist, nach hinten verlagert wird. Das TEMPOL wird also erfindungsgemäß nicht direkt nach Abschluss der Reaktion zum Backbone-Harz zugegeben, sondern erst in einem bestimmen Abstand nach diesem Zeitpunkt, beispielsweise erst nach mindestens 4 Stunden. Die Verringerung der Reaktivitätsdrift und der Gelzeitdrift hat den Vorteil, dass das Reaktivharz eine erhöhte Lagerstabilität hat.

Außerdem konnten die Erfinder zeigen, dass überraschenderweise die Lagerstabilität erhöht und die Reaktivitätsdrift bzw. Gelzeitdrift verringert werden kann, wenn bei der Herstellung einer Zusammensetzung auf der Basis eines Urethan(meth)acrylatharzes auf pMDI-Basis die Synthese des Urethan(meth)acrylatharzes bei einer höheren Temperatur erfolgt, als bei der Synthese von Urethan(meth)acrylatharzen üblich ist. Der Fachmann würde üblicherweise bestrebt sein, bei der Synthese eines Urethan(meth)acrylatharzes die Temperatur, bei der die Isocyanatverbindung mit der hydroxyfunktionalisierten (Meth)acrylatverbindung umgesetzt wird, möglichst niedrig zu halten, da bekannt ist, dass eine zu hohe Temperatur die Lagerstabilität negativ beeinflusst und das Risiko einer ungewollten Polymerisation bei der Synthese erhöht.

Die Erfinder konnten des Weiteren zeigen, dass eine höhere Temperatur während der Nachreaktionszeit (nach Abschluss der Reaktion zum Urethan(meth)acrylatharz und vor Zugabe des TEMPOL), während der der Ansatz getempert wird, ebenfalls einen positiven Effekt auf die Gelzeitdrift und die Lagerstabilität hat.

Schließlich betrifft die Erfindung eine Kombination dieser vorteilhaften Verfahrensführungen, also ein Verfahren, in welchem ein Urethan(meth)acrylatharz auf pMDI-Basis bei gegenüber herkömmlichen Verfahren erhöhter Temperatur synthetisiert wird und dann TEMPOL in einem gegenüber herkömmlichen Verfahren größeren zeitlichen Abstand zum Zeitpunkt des Abschlusses der Reaktion und zusätzlich vorteilhafterweise bei einer gegenüber herkömmlichen Verfahren erhöhten Temperatur zum Urethan(meth)acrylat zugegeben wird.

Der positive Effekt auf die Lagerstabilität erklärt sich vermutlich daraus, dass das TEMPOL sowohl als Stabilisator als auch als Inhibitor wirkt. Um die Wirkung als Inhibitor zu erreichen, ist eine größere Menge TEMPOL erforderlich als für eine Wirkung als Stabilisator. Wenn also, wie hier gezeigt, die inhibierende Menge TEMPOL langsamer abgebaut wird (was sich in einer verbesserten Reaktivitätsdrift äußert), so hat dies auch einen positiven Effekt auf die Stabilisierung.

Zum besseren Verständnis der Erfindung werden die folgenden Erläuterungen zum Herstellungsverfahren für ein Reaktivharz und zur hierin verwendeten Terminologie als sinnvoll erachtet.

Das Herstellungsverfahren für ein Reaktivharz verläuft, hier erläutert am Beispiel eines pMDI-basierten Urethanmethacrylates, typischerweise wie folgt:

### 1. Herstellung Backbone-Harz/Reaktivharz-Masterbatch

Polymeres Methylendiphenyldiisocyanat (pMDI) und Hydroxypropylmethacrylat (HPMA) werden in Anwesenheit eines Katalysators und eines Inhibitors (dient dazu, das durch die Polymerisation gebildete Backbone-Harz zu stabilisieren, häufig auch Stabilisator oder Prozessstabilisator genannt) zur Reaktion gebracht. Hierbei entsteht das Backbone-Harz.

Das nach Ende der Reaktion erhaltene Reaktionsgemisch wird als Reaktivharz-Masterbatch bezeichnet. Dieses wird nicht weiter aufgearbeitet, d.h. das Backbone-Harz wird nicht isoliert.

### 2. Herstellung Reaktivharz

Zu dem Reaktivharz-Masterbatch werden nach Abschluss der Reaktion zum Backbone-Harz ein Beschleuniger-Inhibitor-System, d.h. eine Kombination aus einem oder mehreren zusätzlichen Inhibitoren, z.B. TEMPOL, und einem oder mehreren Beschleunigern, z.B. Di-*iso*-propanol-*p*-toluidin und Catechol, sowie ein oder mehrere Reaktivverdünner gegeben.

Hierdurch erhält man das Reaktivharz.

Das Beschleuniger-Inhibitor-System dient dazu, die Reaktivität des Reaktiv-Harzes einzustellen, also den Zeitpunkt einzustellen, bis zu dem das Reaktiv-Harz nach Zugabe eines Initiators noch nicht vollständig ausgehärtet ist und bis zu welchem Zeitpunkt daher eine mit dem Reaktivharz angemischte Dübelmasse nach dem Mischen mit dem Initiator verarbeitbar bleibt.

Der Inhibitor in dem Beschleuniger-Inhibitor-System kann gleich dem Inhibitor bei der Herstellung des Backbone-Harzes sein, wenn dieser auch dazu geeignet ist, die Reaktivität einzustellen, oder ein anderer Inhibitor sein, wenn er nicht beide Funktionen aufweist. TEMPOL etwa kann als Stabilisator und als Inhibitor zu Einstellung der Reaktivität eingesetzt werden.

Im Sinne der Erfindung bedeuten die verwendeten Begriffe:
- *"Backbone-Harz"* ein üblicherweise festes oder hochviskoses radikalisch polymerisierbares Harz, welches durch Polymerisation (z.B. nach Zugabe eines Initiators in Gegenwart eines Beschleunigers) härtet;
- *"Reaktivharz-Masterbatch"* das Reaktionsprodukt der Reaktion zur Herstellung des Backbone-Harzes, also eine Mischung aus Backbone-Harz, Stabilisator und weiteren Bestandteilen der Reaktionsmischung;
- "*Reaktivharz*" eine Mischung aus Reaktivharz-Masterbatch, einem Beschleuniger und einem Inhibitor (auch als Beschleuniger-Inhibitor-System bezeichnet), einem Reaktivverdünner und gegebenenfalls weiteren Additiven; das Reaktivharz ist typischerweise flüssig oder viskos und kann zu einer Reaktivharzkomponente weiterverarbeitet werden; hierin wird das Reaktivharz auch als "*Harzmischung*" bezeichnet;
- "*Inhibitor*" einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als "*Stabilisator*" bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als "*Inhibitor*" bezeichnet - die jeweilige Bedeutung des Begriffes erschließt sich aus dem Kontext);
- "*Initiator*" einen Stoff, der (üblicherweise in Kombination mit einem Beschleuniger) reaktionsinitiierende Radikale bildet;
- "*Beschleuniger*" ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- "*Co-Beschleuniger*" ein Reagenz, welches in die Beschleunigungsreaktion entweder katalytisch oder stöchiometrisch eingreift, um z.B. den Beschleuniger zurückzubilden, die Radikalproduktion pro Zeiteinheit zu moderieren, die Beschleunigungstemperatur noch weiter abzusenken oder eine Kombination dieser oder weiterer Effekte zu bewirken;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- "*Gelzeit*", *t_{m,25}* → *35°C,* die Zeit (t) der Härtungsphase eines wie hierin definierten Reaktivharzes oder einer wie hierin definierten Reaktivharzkomponente, in der sich die Temperatur von einer Starttemperatur von 25°C bei einer Gelzeitmessung auf 35°C erhöht; ein Verfahren zur Bestimmung der Gelzeit ist in den Beispielen beschrieben;
- "*Gelzeitdrift*" (für einen bestimmten ausgewählten Zeitraum, zum Beispiel 30 oder 60 Tage) das Phänomen, dass, wenn die Härtung zu einem anderen Zeitpunkt als zu dem Referenz-Standardzeitpunkt der Härtung (beispielsweise 18 bis 24 Stunden nach der Herstellung des Reaktivharz-Masterbatches oder des Reaktivharzes) durchgeführt wird, die beobachtete Gelzeit von der Gelzeit zum Zeitpunkt der Referenz abweicht;
- "*Harzreaktivität*", *t_{r,25}* → *80°C*, (hier auch als "*Reaktivitätsdauer*" bezeichnet) die Zeit *(t)* bis eine Temperatur von 80°C auf der Reaktivitätskurve bei einer Reaktivitätsmessung mit einer Starttemperatur (*t*ᵣ) von 25°C eines Harzes, eines Reaktivharzes oder einer Reaktivharzkomponente erreicht ist; ein Verfahren zur Bestimmung der Harzreaktivität ist in den Beispielen beschrieben;
- *"Reaktivitätsdrift"* (für einen bestimmten ausgewählten Zeitraum, zum Beispiel 30 oder 60 Tage) das Phänomen, dass, wenn die Härtung zu einem anderen Zeitpunkt als zu dem Referenz-Standardzeitpunkt der Härtung (beispielsweise 18 bis 24 Stunden nach der Herstellung des Reaktivharz-Masterbatches oder des Reaktivharzes) durchgeführt wird, die beobachtete Harzreaktivität von der Harzreaktivität zum Zeitpunkt der Referenz abweicht;
- *"Abschluss der Reaktion"* bzw. "*Reaktionsende*" oder "*Reaktionsabschluss*" den Zeitpunkt, zu dem eine Reaktion vollständig abgelaufen ist; erkennbar ist dies bei einer chemischen Reaktion wie z.B. der Reaktion zur Herstellung des Backbone-Harzes in der Regel daran, dass die mit der Reaktion verbundene Exothermie endet;
- "*Reaktivharzkomponente*" eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die einen Initiator für die Polymerisation eines Backbone-Harzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. "*Zweikomponenten-Reaktivharz-System*" ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- *"Mehrkomponenten-System"* bzw. "*Mehrkomponenten-Reaktivharz-System*" ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;
- "*(Meth)acryl...*/*...(meth)acryl...*", dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl..."-Verbindungen gemeint;
- "*ein*", "*eine*", "*einer*" als Artikel vor einer chemischen Verbindungsklasse, z.B. vor dem Wort "Urethanmethacrylat", dass eine oder mehrere unter diese chemische Verbindungsklasse fallende Verbindungen, z.B. verschiedene Urethanmethacrylate, gemeint sein können. In einer bevorzugten Ausführungsform ist mit diesem Artikel nur eine einzelne Verbindung gemeint;
- *"mindestens ein*", "*mindestens eine",* "*mindestens einer*" zahlenmäßig "*ein oder mehrere".* In einer bevorzugten Ausführungsform ist mit diesem Begriff zahlenmäßig "*ein*", "*eine*", "*einer*" gemeint;
- *"enthalten",* "*umfassen*" und "*beinhalten*", dass neben den genannten Bestandteilen noch weitere vorhanden sein können. Diese Begriffe sind einschließlich gemeint und umfassen daher auch "*bestehen aus*". "*Bestehen aus*" ist abschließend gemeint und bedeutet, dass keine weiteren Bestandteile vorhanden sein können. In einer bevorzugten Ausführungsform bedeuten die Begriffe "*enthalten*", "*umfassen*" und "*beinhalten*" den Begriff *"bestehen aus*";
- *"etwa"* oder "*circa*" oder "ca." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. "*von 100°C bis 120°C*", dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Ein erster Gegenstand der Erfindung ist ein Verfahren zur Herstellung eines Reaktivharzes. Ein zweiter Gegenstand der Erfindung ist das aus diesem Verfahren resultierende Reaktivharz. Ein dritter Gegenstand ist eine Reaktivharzkomponente (A), die ein aus diesem Verfahren resultierendes Reaktivharz enthält. Ein vierter Gegenstand ist ein Verfahren zur Herstellung einer solchen Reaktivharzkomponente (A). Ein fünfter Gegenstand ist ein Reaktivharz-System mit einer erfindungsgemäßen Reaktivharzkomponente (A) und einer Härterkomponente (B), die einen Initiator (wie etwa ein Peroxid) für die Härtung des in dem Reaktivharz enthaltenen Backbone-Harzes enthält. Die Komponenten (A) und (B) sind bis zur Verwendung des Reaktivharz-Systems räumlich getrennt voneinander verpackt, damit erst eine Reaktion stattfindet, wenn die beiden Komponenten miteinander in Kontakt gebracht werden.

Das erfindungsgemäße Verfahren zur Herstellung eines Reaktivharzes umfasst die folgenden Schritte:
(a) Herstellung mindestens eines Backbone-Harzes, welches ein Urethan(meth)acrylatharz ist, aus mindestens einem Isocyanat, welches pMDI ist, und mindestens einem hydroxyfunktionalisierten (Meth)acrylat über einen Zeitraum t1 bei einer Temperatur T1; direkt anschließend an den Abschluss der Reaktion zum Backbone-Harz dann
(b) Rühren des aus Schritt (a) resultierenden Reaktivharz-Masterbatches enthaltend das Backbone-Harz über einen Zeitraum t2 bei einer Temperatur T2;
(c) nach Abschluss des Zeitraums t2 Zugabe von mindestens einem Inhibitor, wobei der mindestens eine Inhibitor ein Piperidinyl-*N*-oxyl oder ein Tetrahydropyrrol-*N*-oxyl oder eine Mischung daraus ist, und wobei die Zugabe des mindestens einen Inhibitors entweder (i) direkt nach Abschluss des Zeitraums t2 bei der Temperatur T2 oder (ii) nach Abkühlen der aus Schritt (b) resultierenden Mischung auf eine Temperatur T3 nach Ablauf eines Zeitraums t3 beginnend mit dem Ende des Zeitraums t2 erfolgt; und
(d) Zugabe von mindestens einem Beschleuniger und optional mindestens einem Reaktivverdünner vor, gleichzeitig mit, oder nach der Zugabe des Inhibitors, um das Reaktivharz zu erhalten.

Die Herstellung des Backbone-Harzes erfolgt durch in der Fachwelt bekannte Verfahren, z.B. indem die erforderlichen Ausgangsverbindungen mit mindestens einem Katalysator, ggf. mindestens einem Prozessstabilisator und ggf. mindestens einem Lösungsmittel oder mindestens einem Reaktivverdünner zur Reaktion gebracht werden. Typischerweise werden alle Herstellungsschritte unter Rühren ausgeführt, es sind jedoch auch andere Durchmischungsarten denkbar. Die weiteren Komponenten zur Herstellung des Reaktivharzes werden erst nach Beendigung der Reaktion zur Herstellung des Backbone-Harzes dem Reaktionsgemisch (also dem Reaktivharz-Masterbatch) zugesetzt. Alternativ können einzelne Komponenten des Reaktivharzes, insbesondere thermisch stabile und nicht reaktive Komponenten, der Reaktionsmischung zur Herstellung des Backbone-Harzes bereits vor Beginn der Reaktion zum Backbone-Harz zugesetzt werden. Der Zusatz dieser weiteren Komponenten nach Abschluss der Reaktion zum Backbone-Harz ist jedoch bevorzugt.

Das erfindungsgemäße Verfahren wird erstens durch den Zeitpunkt charakterisiert, bei dem der mindestens eine Inhibitor, also das Piperidinyl-*N*-oxyl oder Tetrahydropyrrol-*N*-oxyl oder eine Mischung daraus, in Schritt (c) der Mischung zugesetzt wird. Der Zusatz erfolgt nach Ablauf des Zeitraums t2. Dieser Zeitraum, in welchem die Reaktionsmischung auf der Temperatur T2 gehalten wird, ist für die Erfindung charakteristisch, denn während dieses Zeitraums werden vermutlich Verunreinigungen, die zum Abbau des erfindungsgemäß in Schritt (c) zugesetzten Inhibitors führen könnten, zerstört. Nach Ablauf von t2 kann auch noch der Zeitraum t3 abgewartet werden, bevor der Inhibitor zugefügt wird. Dies ermöglicht eine flexible Handhabung des erfindungsgemäßen Verfahrens und der Temperatur, bei der der Inhibitor zugesetzt wird.

Zweitens wird das erfindungsgemäße Verfahren charakterisiert durch die Temperatur T2, welche über den Zeitraum t2 gehalten wird. Nach Beendigung der Reaktion in Schritt (a), welche das Backbone-Harz als Produkt hat, wird der resultierende Reaktivharz-Masterbatch über einen Zeitraum t2 weitergerührt. Die dabei eingehaltene Temperatur T2 ist entweder konstant (in einer Ausführungsform ist es dieselbe Temperatur wie die Reaktionstemperatur T1), oder sie verändert sich über den Zeitraum t2 hinweg. So kann T2 in einer bevorzugten Ausführungsform beispielsweise über einen Zeitraum von mindestens 2 h 100°C oder höher, insbesondere von 100°C bis 120°C betragen. In einer bevorzugten Ausführungsform ist T2 etwa dieselbe Temperatur wie T1 oder sie ist niedriger als T1. Besonders bevorzugt ist T2 etwa T1 oder um maximal 30% niedriger als T1 (bezogen auf die °C-Angabe, also z.B. um maximal 22,5 °C niedriger als T1, wenn T1 75 °C ist). In einer weiteren bevorzugten Ausführungsform beträgt T2 von etwa 60°C bis etwa 140°C, bevorzugter von etwa 75°C bis etwa 130 °C, noch bevorzugter von etwa 80°C bis etwa 125°C, noch bevorzugter von etwa 85°C bis etwa 120°C, und nochmals bevorzugter von etwa 90°C bis etwa 120°C. Ganz besonders bevorzugt beträgt T2 von etwa 100°C bis etwa 120°C. In einer speziell bevorzugten Ausführungsform beträgt T2 von 105°C bis 110°C oder einen Wert innerhalb dieses Bereichs.

T2 kann sich über den Zeitraum t2 verändern. Wenn sich T2 verändert, so kann dies in Stufen oder kontinuierlich geschehen. In einer bevorzugten Ausführungsform wird T2 zunächst auf einer Stufe (z.B. der Temperatur T1) konstant gehalten und dann verändert, typischerweise gesenkt.

Der Zeitraum t2 ist von etwa 0,5 h bis etwa 24 h, bevorzugt von etwa 0,75 h bis etwa 8 h, bevorzugter von etwa 1 h bis etwa 4 h, noch bevorzugter von etwa 1,5 h bis etwa 3 h, besonders bevorzugt von etwa 2 h bis etwa 2,5 h. In einer bevorzugten Ausführungsform ist t2 nicht kürzer als etwa 1,5 h, bevorzugter nicht kürzer als etwa 2 h. So wird sichergestellt, dass T2 lange genug aufrechterhalten wird, um die den Inhibitor zerstörenden Verunreinigungen abzubauen.

Als Faustregel gilt: je höher T2, desto kürzer kann der Zeitraum t2 sein. Anhand dieser Faustregel kann ein geeignetes Verhältnis von T2 zu t2 im Einzelfall durch den Fachmann ermittelt werden. Das Produkt von t2 multipliziert mit T2, ausgedrückt in h mal °C (h°C), beträgt vorteilhafterweise von 75 (z.B. 100 mal 0,75) bis 480 (z.B. 80 mal 6), bevorzugter von 105 (z.B. 105 mal 1) h°C bis 360 (z.B. 100 mal 3,6) h°C, noch bevorzugter von 200 (z.B. 100 mal 2) bis 300 (z.B. 100 mal 3), und besonders bevorzugt von 210 (z.B. 105 mal 2) h°C bis 280 (z.B. 120 mal 2,5) h°C. Ganz besonders bevorzugt beträgt es von 240 (z.B. 120 mal 2) bis 280. Verändert sich die Temperatur im Laufe von t2, so wird die mittlere Temperatur über den Zeitraum t2 hinweg als T2 verwendet.

Durch diese Temperatur über den Zeitraum t2 wird das Ziel der vorliegenden Erfindung erreicht, dass ein Abbau des in Schritt (c) zugegebenen mindestens einen Inhibitors vom Piperidinyl-*N*-oxyl-Typ und/oder Tetrahydropyrrol-*N*-oxyl-Typ verringert oder verhindert wird. Eine mögliche Erklärung hierfür ist, ohne dass die Erfindung an diese Theorie gebunden sein soll, dass Verunreinigungen, insbesondere Säurechloride, welche direkt nach der Reaktion zum Backbone-Harz noch in der Reaktionsmischung vorhanden sind, zum Abbau des Inhibitors führen können. Diese Verunreinigungen werden durch die Einwirkung der Temperatur T2 während des Zeitraums t2 zerstört. Wird der Inhibitor, beispielsweise TEMPOL, erst danach zugegeben, so wird er weniger stark abgebaut als dies bei einer Zugabe direkt nach Abschluss der Reaktion zum Backbone-Harz der Fall wäre. Die verzögerte Zugabe schützt also den Inhibitor vor Abbau. Eine Verwendung anderer oder zusätzlicher Inhibitoren oder von Stabilisatoren für den Inhibitor (um dessen Abbau zu unterbinden) wird dadurch entweder (vorteilhafterweise) völlig unnötig, oder es wird eine geringere Menge dieser weiteren Inhibitoren benötigt. Dies erhöht die Wirtschaftlichkeit des Verfahrens.

Es entsteht ein Reaktivharz, welches lagerstabil ist und direkt auf allen Anwendungsgebieten für Reaktivharze, insbesondere in Reaktivharzkomponenten von Zwei- oder Mehrkomponentenmörteln, eingesetzt werden kann.

Die Temperatur T3, auf die die Mischung nach Ablauf von t2 gebracht wird, ist entweder gleich zu T2 oder niedriger als T2. Bevorzugt beträgt T3 von etwa 20°C bis etwa 90°C, bevorzugter von etwa 22°C bis etwa 75°C, noch bevorzugter von etwa 25°C bis etwa 60°C, und nochmals bevorzugter von etwa 25°C bis etwa 40°C. Ganz besonders bevorzugt beträgt T3 von etwa 25°C bis etwa 30°C. In einer typischen Ausführungsform beträgt T3 von etwa 25°C bis etwa 30°C, und alle Zutaten bis auf den Inhibitor werden der Mischung während des Zeitraums t3 zugesetzt, typischerweise zu Beginn des Zeitraums t3. Da zu diesem Zeitpunkt die Temperatur noch T2 ist oder die Abkühlung auf T3 gerade erst begonnen wurde, beschleunigt dieser Zeitpunkt des Zusatzes die Durchmischung der Komponenten. Dagegen wird in den Fällen, in denen der Inhibitor, welcher ein Piperidinyl-*N*-oxyl oder ein Tetrahydropyrrol-*N*-oxyl oder eine Mischung daraus ist, erst nach Ablauf von t3 zugesetzt wird, der maximale Abstand zum Reaktionsende der Reaktion zum Backbone-Harz gewahrt. Dies kann den Abbau des Inhibitors weiter verringern. Falls T3 niedriger als T2 ist, hat auch dies einen positiven Effekt auf den Abbau des Inhibitors.

Der Zeitraum t3 ist von etwa 0,5 h bis etwa 24 h, bevorzugt von etwa 0,75 h bis etwa 8 h, bevorzugter von etwa 1 h bis etwa 4 h, noch bevorzugter von etwa 1,5 h bis etwa 3 h, besonders bevorzugt von etwa 2 h bis etwa 2,5 h. Grundsätzlich ist die Länge von t3 für die Erfindung nicht so ausschlaggebend wie die Länge von t2. Je kürzer t3 allerdings ist, desto wirtschaftlicher wird das Verfahren.

Ein erfindungsgemäßes Reaktivharz ist ein mit dem erfindungsgemäßen Verfahren zur Herstellung eines Reaktivharzes hergestelltes Reaktivharz. Es enthält mindestens ein Backbone-Harz, mindestens einen Reaktivverdünner, mindestens einen Beschleuniger, und mindestens einen Inhibitor, der ein Piperidinyl-*N*-oxyl oder ein Tetrahydropyrrol-*N*-oxyl oder eine Mischung daraus ist. Da das Backbone-Harz nach seiner Herstellung typischerweise ohne Isolierung für die Herstellung des Reaktivharzes verwendet wird, sind in der Regel auch noch die neben dem Backbone-Harz im Reaktivharz-Masterbatch enthaltenen weiteren Bestandteile im Reaktivharz vorhanden.

Eine erfindungsgemäße Reaktivharzkomponente (A) enthält neben dem erfindungsgemäßen Reaktivharz einen oder mehrere Füllstoffe. Diese Füllstoffe sind typischerweise anorganisch.

Der Inhibitor, welcher in dem erfindungsgemäßen Verfahren zur Herstellung des Reaktivharzes nach dem Abschluss der Reaktion zum Backbone-Harz und nach Verstreichen des Zeitraums t2 und gegebenenfalls t3 zugesetzt wird, ist ein Piperidinyl-*N-*oxyl oder ein Tetrahydropyrrol-*N*-oxyl oder eine Mischung daraus. Der Inhibitor ist ein stabiles Nitroxylradikal. Derartige stabile Nitroxylradikale vom Typ Piperidinyl-*N*-oxyl oder Tetrahydropyrrol-*N*-oxyl sind in der DE 199 56 509 A1 und der DE 195 31 649 A1 beschrieben, deren diesbezügliche Inhalte hiermit in die Anmeldung aufgenommen werden.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist. Das TEMPOL ist bevorzugt das in den Beispielen verwendete TEMPOL.

Der Inhibitor wird zugesetzt in der Fachwelt bekannten üblichen Mengen, bevorzugt in einer Menge von etwa 0,0005 bis etwa 2 Gew.-% (bezogen auf das - letztendlich damit hergestellte - Reaktivharz), stärker bevorzugt von etwa 0,005 bis etwa 2 Gew.-% (bezogen auf das Reaktivharz), noch stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz), noch stärker bevorzugt von etwa 0,1 bis etwa 0,6 Gew.-% (bezogen auf das Reaktivharz), noch stärker bevorzugt von etwa 0,2 bis etwa 0,4 Gew.-% (bezogen auf das Reaktivharz). Besonders bevorzugt ist eine Menge von etwa 0,25 bis etwa 0,35 Gew.-% (bezogen auf das Reaktivharz), ganz besonders bevorzugt von etwa 0,25 bis etwa 0,28 Gew.-% (bezogen auf das Reaktivharz). In besonders bevorzugten Ausführungsformen ist er in der in den Beispielen beschriebenen Mengen vorhanden.

Das im erfindungsgemäßen Verfahren in Schritt (a) hergestellte und in dem erfindungsgemäßen Reaktivharz enthaltene Backbone-Harz ist ein verzweigtes Urethan(meth)acrylat oder eine Mischung aus zwei oder mehreren Urethan(meth)acrylaten, von denen mindestens eines ein verzweigtes Uretahn(meth)acrylat ist. Das Urethan(meth)acrylat ist bevorzugt ein verzweigtes Urethanmethacrylat oder eine Mischung aus zwei oder mehreren Urethan(meth)acrylaten von denen mindestens eines ein verzweigtes Urethanmethacrylat ist. Grund ist die höhere Alkalistabilität von Methacrylaten im Vergleich zu Acrylaten.

Die im Rahmen der vorliegenden Erfindung hergestellten verzweigten Urethan(meth)acrylate werden aus mindestens einem Isocyanat und mindestens einem (Meth)acrylat hergestellt. Das mindestens eine Isocyanat ist polymeres Methylendiphenyldiisocyanat (pMDI) und das (Meth)acrylat bevorzugt eine hydroxyfunktionalisierte (Meth)acrylatverbindung. Das pMDI wird entweder direkt verwendet, oder es wird mit einem Diol oder Polyol vorpolymerisiert. Eine direkte Verwendung von pMDI ist bevorzugt.

Wird das pMDI vorpolymerisiert mit einem Diol oder Polyol, so wird typischerweise erst das Isocyanat mit dem Katalysator und mit mindestens einer di- oder höherfunktionellen Hydroxyverbindung und gegenebenfalls einem Reaktivverdünner gemischt, um eine Reaktion zwischen dem Isocyanat und der Hydroxyverbindung zu erlauben und um ein vorpolymerisiertes pMDI zu erhalten. Das vorpolymerisierte pMDI wird dann anschließend statt pMDI als das Isocyanat in Schritt (a) verwendet.

Aus dem mindestens einen Isocyanat und dem mindestens einen (Meth)acrylat wird das Urethan(meth)acrylat (Backbone-Harz) hergestellt durch Umsetzen des mindestens einen Isocyanats mit dem mindestens einen (Meth)acrylat (geeignet ist insbesondere ein hydroxyfunktionalisiertes (Meth)acrylat) in Anwesenheit eines Katalysators und gegebenenfalls mindestens eines Prozessstabilisators. Das erhaltene Reaktionsgemisch wird als Reaktivharz-Masterbatch bezeichnet.

Bevorzugt wird diese Reaktion zur Herstellung des Backbone-Harzes bei einer Temperatur T1 von etwa 60°C bis etwa 140°C, bevorzugter bei einer Temperatur von etwa 80°C bis etwa 130°C, noch bevorzugter bei einer Temperatur von etwa 85°C bis etwa 120°C durchgeführt. Besonders bevorzugt ist eine Temperatur von etwa 90°C bis etwa 120°C, ganz besonders bevorzugt von etwa 100°C bis 120°C. In einer bevorzugten Ausführungsform wird der Reaktivharz-Masterbatch nach Abschluss der Reaktion bei einer Temperatur T2 weitergerührt, welche die Reaktionstemperatur T1 ist oder um von 0% bis etwa maximal 30% niedriger als T1 ist (bezogen auf die °C-Angabe, also z.B. um maximal 22,5 °C niedriger als T1, wenn T1 75 °C ist). Die bevorzugten Bereiche für T2 sind schon weiter oben angegeben.

Der Zeitraum t1 bemisst sich danach, wie lange die Reaktion zur Herstellung des Backbone-Harzes dauert. Der Abschluss der Reaktion ist daran erkennbar, dass die Exothermie endet. Die Dauer lässt sich durch die Reaktionstemperatur T1 und dadurch beeinflussen, wie schnell die vollständige Zugabe der Reaktanden zueinander abgeschlossen ist. Um die Reaktion zu kontrollieren, wird typischerweise das pMDI zu dem (Meth)acrylat zugetropft.

Das hydroxyfunktionalisierte (Meth)acrylat wird bevorzugt in solch einer Menge eingesetzt, dass pro Mol Isocyanatgruppe mindestens ein Mol des hydroxyfunktionalisierten (Meth)acrylats eingesetzt wird. Gewöhnlich wird ein leichter Überschuss an hydroxyfunktionalisiertem (Meth)acrylat eingesetzt, um eine nahezu vollständige oder ganz vollständige Reaktion zu gewährleisten, so dass nur ein äußerst geringer Anteil oder kein Anteil an freien Isocyanatgruppen nach der Umsetzung verbleibt. Damit soll unter anderem verhindert werden, dass die noch freien Isocyanatgruppen mit dem zur Herstellung des Reaktivharzes aus dem Reaktivharz-Masterbatch gegebenenfalls zugegebenen Reaktivverdünner bei der Aushärtung des Harzes co-polymerisieren.

Alternativ und bevorzugt kann das hydroxyfunktionalisierte (Meth)acrylat in einem deutlichen Überschuss eingesetzt werden, wobei der nicht mit der Isocyanatverbindung reagierende Teil als Reaktivverdünner für die Umsetzung sowie für die anschließend herzustellende Harzmischung mit dem Urethan(meth)acrylatharz fungiert.

Wird ein vorpolymerisiertes pMDI verwendet, das durch Umsetzen des Isocyanats mit mindestens einer di- oder höherfunktionellen Hydroxyverbindung in Anwesenheit des Katalysators hergestellt wird, so sind als di- oder höherfunktionelle Hydroxyverbindungen geeignet zwei- oder höherwertige Alkohole, z. B. Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol-A bzw. -F bzw. deren Oxethylierungs- und/oder Hydrierungs- bzw. Halogenierungsprodukte, höherwertige Alkohole, wie z. B. Glycerin, Trimethylolpropan, Hexantriol und Pentaerythrit, hydroxygruppenhaltige Polyether, z. B. Oligomere aliphatischer oder aromatischer Oxirane und/oder höherer cyclischer Ether, z. B. Ethylenoxid, Propylenoxid, Styroloxid und Furan, Polyether, die in der Hauptkette aromatische Struktureinheiten enthalten, z. B. die des Bisphenol A bzw. F, hydroxygruppenhaltige Polyester auf Basis der obengenannten Alkohole bzw. Polyether und Dicarbonsäuren bzw. ihrer Anhydride, z. B. Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung bzw. Erhöhung der Wärmeformbeständigkeit (WFB) des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Die Menge der optional zu verwendenden weiteren di- oder höherfunktionellen Hydroxyverbindungen kann sehr stark variieren, solange ein Überschuss an Isocyanatgruppen in dem vorpolymerisierten pMDI verbleibt. Das Molverhältnis zwischen den Hydroxylgruppen der weiteren di- oder höherfunktionellen Hydroxyverbindung und den Isocyanatgruppen ist im Allgemeinen größer als etwa 0,01, stärker bevorzugt größer als etwa 0,05 und noch stärker bevorzugt größer als etwa 0,1. Das Molverhältnis zwischen den Hydroxylgruppen der weiteren di- oder höherfunktionellen Hydroxyverbindung und den Isocyanatgruppen ist bevorzugt kleiner als etwa 0,95, stärker bevorzugt kleiner als etwa 0,9 und noch stärker bevorzugt kleiner als etwa 0,7.

Als hydroxyfunktionalisiertes (Meth)acrylat sind mit einer oder mehreren Hydroxygruppen am Kohlenwasserstoffrest substituierte Acrylsäuren und Acrylsäureester geeignet. Diese sind bevorzugt ausgewählt aus der Gruppe bestehend aus Hydroxy-Methacrylsäure, hydroxylgruppenhaltigen Estern der (Meth)acrylsäure mit zwei- oder mehrwertigen Alkoholen, Pentaerythrittri(meth)acrylat, Glyceroldi(meth)acrylaten wie Trimethylolpropandi(meth)acrylat, und Neopentylglycolmono(meth)acrylat. Bevorzugt sind (Meth)acrylsäurehydroxylalkylester, wie Hydroxyethyl(meth)acrylat (HEMA), 2-Hydroxypropyl(meth)acrylat, 3-Hydroxypropyl(meth)acrylat, 2-Hydroxybutyl(meth)acrylat, 3-Hydroxybutyl(meth)acrylat, 2-Hydroxycyclohexyl(meth)acrylat, Glycerol-1,3-di(meth)acrylat (GDMA), Glycerol-1,3-diacrylat (GDA), Glycerolmethacrylat (GMA), Glycerolacrylat (GA), Polyoxyethylen(meth)acrylat und Polyoxypropylen(meth)acrylat, Gemische von deren Isomeren, sowie Gemische aus zwei oder mehreren dieser Verbindungen, da solche Verbindungen der sterischen Hinderung der Verseifungsreaktion dienen. Bevorzugter sind Methacrylsäurehydroxylalkylester, wie Hydroxyethylmethacrylat, 2-Hydroxypropylmethacrylat, 3-Hydroxypropylmethacrylat, 2-Hydroxybutylmethacrylat, 3-Hydroxybutylmethacrylat, 2-Hydroxycyclohexylmethacrylat, Glycerol-1,3-dimethacrylat, Glycerolmethacrylat, und Gemische aus zwei oder mehreren dieser Verbindungen. Besonders bevorzugt ist 2-Hydroxypropylmethacrylat oder 3-Hydroxypropylmethacrylat oder eine Mischung aus 2- und 3-Hydroxypropylmethacrylat (HPMA). Ganz besonders bevorzugt ist eine Mischung aus 2- und 3-Hydroxypropylmethacrylat (HPMA), in welcher das 2-Hydroxypropylmethacrylat die Hauptkomponente darstellt (die Abkürzung HPMA wird meist für derartige Mischungen verwendet, so enthält z.B. Visiomer HPMA 98 nach Herstellerangaben 98% 2-Hydroxypropylmethacrylat). Derartige Mischungen werden als kommerzielles HPMA angeboten. Speziell bevorzugt sind die in den Beispielen verwendeten hydroxyfunktionalisierten (Meth)acrylate.

Neben dem pMDI bzw. dem vorpolymerisierten pMDI können auch eines oder mehrere weitere Isocyanate oder Isocyanat-Präpolymere zur Herstellung des Backbone-Harzes verwendet werden.

Erfindungsgemäß können für die Reaktion des pMDI bzw. des vorpolymerisierten pMDI mit dem hydroxyfunktionalisierten (Meth)acrylat die üblicherweise zur Herstellung von Urethan(meth)acrylatharzen eingesetzten Katalysatoren verwendet werden.

In der Publikation "Catalysis of the Isocyanate-Hydroxyl Reaction with Non-Tin Catalysts" von W. J. Blank. Z. A. He und E. T. Hessell, 24th International Conference in Organic Coatings, Athens Greece, sind organische Metallsalze und Chelate beschrieben, die für die Herstellung von Urethanverbindungen geeignet sind, wobei explizit folgende Verbindungen genannt werden: Chrom(III)dionat, Chrom(III)octoat, Titantetrabutoxid, Calciumoctoat, Bismuthcarboxylat, Zirkoniumacetoacetat, Zirkoniumtetradionat-Komplex und Zirkoniumtetrakis(2,4-pentanedionato)-Komplex. In der WO 2012/076686 A1 werden weitere ähnliche Verbindungen genannt, die ebenfalls für die Herstellung von Urethanharzen geeignet sind, wobei Zirkoniumalkoxide, wie Zirkoniumtetrabutoxid, und Zirkoniumcarboxylate, wie Zirkoniumtetraacetylacetonat, als besonders effektiv beschrieben werden.

Organozinnverbindungen sind häufig eingesetzte Katalysatoren, insbesondere Dibutylzinndilaurat oder Dioctylzinndilaurat. Dibutylzinndilaurat ist hinsichtlich seiner Reaktivität und Selektivität besonders bevorzugt ist.

Alternativ kann der Katalysator aus der Gruppen von Verbindungen ausgewählt sein, die aus Zinkalkoxiden, wie Zinkneodekanoat und Zinkoctoat, Zinkcarboxylaten, wie Zinkacetylacetonat, Zinkoxalat und Zinkacetat, Zirkoniumoctoat und Eisenacetylacetonat besteht. Diese weisen gegenüber den bereits erwähnten Verbindungen den Vorteil auf, dass nur eine verminderte oder keine Toxizität aufweisen und dabei eine selektive und schnelle Umsetzung der verwendeten Isocyanatverbindungen sowohl mit primären als auch mit sekundären Hydroxyverbindungen gewährleisten, ohne dabei die Aushärtung der damit hergestellten Harzzusammensetzungen negativ zu beeinflussen. Allerdings können Zink-Katalysatoren eine Allophanatisierung katalysieren; deshalb sind Zinn-Katalysatoren bevorzugt.

Das erhaltene Urethan(meth)acrylat hat bevorzugt ein Molekulargewicht Mn im Bereich von etwa 500 bis etwa 2500 Dalton, stärker bevorzugt von etwa 500 bis etwa 1500 Dalton (nach ISO 13885-1).

Das nach dem erfindungsgemäßen Verfahren hergestellte Urethan(meth)acrylat kann noch andere reaktive Gruppen, die mit einem Radikalinitiator, wie Peroxiden, polymerisiert werden können, enthalten, zum Beispiel reaktive Gruppen, die von der Itaconsäure, Citraconsäure oder allylischen oder vinylischen Gruppen und dergleichen abgeleitet sind, wie Styrolderivate, Crotonsäurederivate, Allylalkohol, Ethylenglycolvinylether, Allyloxyethanol, Diethylenglycolmonoallylether, Di(ethylenglycol)vinylether und Vinylcyclopropanderivate. Diese anderen reaktiven Gruppen können durch Reaktion von im Urethan(meth)acrylat verbliebenen freien Hydroxylgruppen (z.B. freien Hydroxylgruppen von vorpoylmerisiertem pMDI, die nach der Umsetzung mit HPMA im Reaktionsprodukt verbleiben) mit entsprechenden Reaktionspartnern in das Urethan(meth)acrylat eingeführt werden. Derartige Reaktionen sind dem Fachmann bekannt.

Der prozentuale Anteil (in Gew.-% des Reaktivharzes) von Urethan(meth)acrylat in dem nach dem erfindungsgemäßen Verfahren hergestellten Reaktivharz beträgt vorteilhafterweise mehr als etwa 5%, bevorzugt mehr als etwa 15%, und besonders bevorzugt mehr als etwa 20%. Der prozentuale Anteil (in Gew.-% des Reaktivharzes) von Urethan(meth)acrylat in dem Reaktivharz beträgt vorteilhafterweise von etwa 5% bis etwa 90%, bevorzugt von etwa 8% bis etwa 80%, bevorzugter von etwa 10% bis etwa 60%, bevorzugter von etwa 20% bis etwa 55%, noch bevorzugter von etwa 25% bis etwa 55%, besonders bevorzugt von etwa 25% bis etwa 50% und ganz besonders bevorzugt von etwa 28% bis etwa 45%.

Neben dem Nitroxylradikal vom Typ Piperidinyl-*N*-oxyl oder Tetrahydropyrrol-*N*-oxyl können sowohl zur weiteren Stabilisierung des Reaktivharzes oder der das Reaktivharz enthaltenden Reaktivharzkomponente (A) oder anderer das Reaktivharz enthaltender Zusammensetzungen als auch zur Einstellung der Harzreaktivität ein oder mehrere weitere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese weiteren Inhibitoren unter phenolischen Verbindungen und nicht-phenolischen Verbindungen und/oder Phenothiazinen, ausgewählt.

Als phenolische Inhibitoren, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-oxyl-Radikale, jedoch nicht vom Piperidinyl-*N*-oxyl- oder Tetrahydropyrrol-*N*-oxyl-Typ, in Betracht, wie Aluminium-*N*-nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugt sind die weiteren Inhibitoren ausgewählt aus der Gruppe der Catechole, Catecholderivate und Phenothiazine. Besonders bevorzugt sind die weiteren Inhibitoren ausgewählt aus der Gruppe der Catechole und Phenothiazine. Ganz besonders bevorzugt sind die in den Beispielen verwendeten weiteren Inhibitoren, bevorzugt etwa in den in den Beispielen angegebenen Mengen.

Die weiteren Inhibitoren können, abhängig von den gewünschten Eigenschaften des Reaktivharzes, entweder alleine oder als Kombination von zweien oder mehreren davon verwendet werden. Die Kombination von phenolischen und nicht-phenolischen Inhibitoren ermöglicht dabei einen synergistischen Effekt, wie auch die Einstellung einer im Wesentlichen driftfreien Einstellung der Harzreaktivität des Reaktivharzes zeigt.

Die weiteren Inhibitoren sind in einer Menge von etwa 0,005 Gew.-% bis etwa 3 Gew.-%, vorzugsweise von etwa 0,01 bis etwa 1 Gew.-%, bevorzugter von etwa 0,02 bis etwa 0,4 Gew.-%, noch bevorzugter von etwa 0,05 bis etwa 0,2 Gew-%, bezogen auf die Harzmischung, vorhanden.

In Schritt (c) wird neben dem mindestens einen Inhibitor vom Piperidinyl-*N*-oxyl- oder Tetrahydropyrrol-*N*-oxyl-Typ und dem optional vorhandenen weiteren Inhibitor typischerweise auch mindestens ein Beschleuniger zugegeben. Hierdurch werden schnellhärtende Reaktivharze und Reaktivharzkomponenten erhalten, die bei Raumtemperatur aushärten (kalthärtend). Geeignete Beschleuniger sind dem Fachmann bekannt. Diese sind zweckmäßig Amine, bevorzugt Toluidine, und/oder Metallsalze.

Als Beschleuniger geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, *n*-Propylamin, Di-*n*-propylamin, Tri-n-propylamin, *Iso*-propylamin, Di-*iso*-propylamin, Tri-*iso*-propylamin, *n*-Butylamin, *Iso-*butylamin, *tert*-Butylamin, Di-*n*-butylamin, Di-*iso*-butylamin, Tri-*iso*-butylamin, *n-*Pentylamin, *Iso*-pentylamin, Di-*iso*-pentylamin, Hexylamine, Octylamine, Dodecylamine, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, *N*-Methylstearylamin, Dialkylamine, Ethylendiamin, *N,N*'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, *N,N*-Dimethylaminoethanol, 2-(2-Diethylaminoethoxy)ethanol, Bis-(2-hydroxyethyl)-oleylamin, Tris[2-(2-hydroxyethoxy)ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, *N*-Methylcyclohexylamin, *N,N*-Dimethylcyclohexylamin, Dicyclohexylamin, *N*-Ethylcyclohexylamin, *N*-(2-Hydroxyethyl)cyclohexylamin, *N,N*-Bis(2-hydroxyethyl)cyclohexylamin, *N*-(3-Aminopropyl)cyclohexylamin, Aminomethylcyclohexan, Hexahydrotoluidin, Hexahydrobenzylamin, Anilin, *N*-Methylanilin, *N,N*-Dimethylanilin, *N,N-*Diethylanilin, *N,N*-Dipropylanilin, *iso*-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, β-Phenylethylamin, Xylidin, Di-*iso*-propylanilin, Dodecylanilin, Aminonaphthalin, *N*-Methylaminonaphthalin, *N,N*-Dimethylaminonaphthalin, *N,N-*Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis(aminophenyl)propan, Aminoanisole, Aminothiophenole, Aminodiphenylether, Aminocresole, Morpholin, *N*-Methylmorpholin, N-Phenylmorpholin, Hydroxyethylmorpholin, *N*-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und *N,N*-Dimethyl-*p*-toluidin.

Polymere Amine, wie solche die durch Polykondensation von *N,N*-Bis(hydroxylalkyl)anilin mit Dicarbonsäuren oder durch Polyaddition von Ethylenoxid oder anderen Epoxiden und diesen Aminen erhalten werden, sind ebenso als Beschleuniger geeignet.

Als Beschleuniger geeignete Metallsalze sind zum Beispiel Cobaltoctoat oder Cobaltnaphthenoat sowie Vanadium-, Kalium-, Kalzium-, Kupfer-, Eisen-, Mangan- oder Zirkoniumcarboxylate. Weitere geeignete Metallsalze sind die weiter oben beschriebenen Zinn-Katalysatoren.

Als Beschleuniger sind Anilin- und Toluidin-Derivate und *N,N*-Bisalkylarylamine bevorzugt, wie *N,N*-Dimethylanilin, *N,N*-Diethylanilin, *N,N*-Dimethyl-p-toluidin, *N,N-*Bis(hydroxyalkyl)arylamine, *N,N*-Bis(2-hydroxyethyl)aniline, *N,N*-Bis(2-hydroxyethyl)toluidin, *N,N*-Bis(2-hydroxypropyl)anilin, *N,N*-Bis(2-hydroxypropyl)toluidin, *N,N*-Bis(3-methacryloyl-2-hydroxypropyl)-p-toluidin, *N,N*-Dibutoxyhydroxypropyl-p-toluidin und 4,4'-Bis(dimethylamino)diphenylmethan. Besonders bevorzugt ist Di-*iso*-propanol-p-toluidin.

Der Beschleuniger wird in einer Menge von etwa 0,01 bis etwa 10 Gew.-%, bevorzugt etwa 0,2 bis etwa 5 Gew.-%, bevorzugter von etwa 0,5 bis etwa 3 Gew.-%, noch bevorzugter von etwa 1 bis etwa 2,5 Gew.-%, noch bevorzugter von etwa 1,4 bis etwa 2,2 Gew.-%, bezogen auf das Reaktivharz, eingesetzt.

Bevorzugte Beschleuniger sind die in den Beispielen verwendeten Beschleuniger, bevorzugt etwa in den in den Beispielen angegebenen Mengen.

Dem Reaktivharz-Masterbatch kann ferner ein Co-Beschleuniger zugegeben werden, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Menge an gegebenenfalls vorhandenem Co-Beschleuniger in dem Reaktivharz kann stark variieren und liegt bevorzugt im Bereich von etwa 0,01 Gew.-% bis etwa 10 Gew.-%, bevorzugt von etwa 0,1 Gew.-% bis etwa 5 Gew.-%, bezogen auf das Gesamtgewicht des Reaktivharzes.

Der Beschleuniger und gegebenenfalls der Co-Beschleuniger kann/können zusammen mit dem gegebenenfalls weiteren Reaktivverdünner einzeln oder als Gemisch dem Reaktivharz-Masterbatch zugegeben werden. Alternativ kann der Beschleuniger gegebenenfalls zusammen mit dem Co-Beschleuniger dem bereits mit Reaktivverdünner versetzten Reaktivharz-Masterbatch zugegeben werden.

Der Reaktivharz-Masterbatch kann gegebenenfalls bereits mindestens einen Reaktivverdünner enthalten. Dabei kann, wie bereits erwähnt, der Überschuss an hydroxyfunktionalisiertem (Meth)acrylat als Reaktivverdünner fungieren. Daneben, wenn das hydroxyfunktionalisierte (Meth)acrylat in etwa äquimolaren Mengen mit der Isocyanatgruppe eingesetzt wird, oder zusätzlich, falls ein Überschuss an hydroxyfunktionalisiertem (Meth)acrylat verwendet wird, können weitere Reaktivverdünner dem Reaktionsgemisch zugegeben werden, welche strukturell von dem hydroxyfunktionalisierten (Meth)acrylat verschieden sind.

Geeignete Reaktivverdünner sind niederviskose, radikalisch co-polymerisierbare Verbindungen, bevorzugt kennzeichnungsfreie Verbindungen, die zugegeben werden um unter anderem die Viskosität des Urethan(meth)acrylats bzw. der Vorstufen bei dessen Herstellung anzupassen, falls erforderlich.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat, 1,2-Ethandioldi(meth)acrylat, 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1,0.^{2.6}-decan, 3-(Meth)cyclopentadienyl(meth)acrylat, und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat, 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat, oder eine Mischung aus diesen drei Methacrylaten. Am bevorzugtesten ist ein Gemisch aus 2- und 3-Hydroxypropylmethacrylat. Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Bevorzugte Reaktivverdünner sind die in den Beispielen verwendeten Reaktivverdünner, bevorzugt etwa in den in den Beispielen angegebenen Mengen.

Der bzw. die Reaktivverdünner wird bzw. werden bevorzugt in einer Menge von 0 bis etwa 80 Gew.-%, besonders bevorzugt von etwa 10 bis etwa 60 Gew.-%, noch bevorzugter von etwa 20 bis etwa 50 Gew.-%, bezogen auf das Reaktivharz, zugegeben.

Zweckmäßig wird die Härtung des Reaktivharzes mit einem Peroxid als Initiator initiiert. Alle dem Fachmann bekannten Peroxide, die zum Härten von Urethan(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel - C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. PeroxidVerbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet. In einer besonders bevorzugten Ausführungsform wird zum Härten eines der in den Beispielen beschriebenen Peroxide verwendet.

Gegenstand der vorliegenden Erfindung ist das hier beschriebene Verfahren zur Herstellung eines Reaktivharzes. Gegenstand ist des Weiteren das durch dieses Verfahren hergestellte Reaktivharz.

Der Anteil des erfindungsgemäßen Reaktivharz-Masterbatches an dem erfindungsgemäßen Reaktivharz wird bevorzugt so gewählt, dass die Menge des erfindungsgemäß verwendeten Urethan(meth)acrylats (also des Backbone-Harzes) von etwa 15 Gew.-% bis etwa 95 Gew.-%, bevorzugt von etwa 20 Gew.-% bis etwa 60 Gew.-%, noch bevorzugter von etwa 30 Gew.-% bis etwa 50 Gew.-% bezogen auf das Reaktivharz beträgt.

Gegenstand der vorliegenden Erfindung ist auch ein Reaktivharz-System, bestehend aus einer Reaktivharzkomponente (A) und einer Härterkomponente (B). Die Reaktivharzkomponente (A) alleine ist ebenfalls Gegenstand der vorliegenden Erfindung. Besagte Reaktivharzkomponente (A) enthält das erfindungsgemäße Reaktivharz.

Die Komponente (A) kann neben dem erfindungsgemäßen Reaktivharz Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe nicht überschreiten.

Zur Herstellung einer Reaktivharzkomponente für bauliche Anwendungen, inbesondere die chemische Befestigung können dem erfindungsgemäßen Reaktivharz übliche Füllstoffe zugegeben werden. Diese Füllstoffe sind typischerweise anorganische Füllstoffe, wie beispielsweise weiter unten beschrieben.

Der Anteil des Reaktivharzes in der Reaktivharzkomponente beträgt bevorzugt von etwa 10 bis etwa 70 Gew.-%, stärker bevorzugt von etwa 30 bis etwa 50 Gew.-%, bezogen auf die Reaktivharzkomponente. Dementsprechend beträgt der Anteil der Füllstoffe bevorzugt von etwa 90 bis etwa 30 Gew.-%, stärker bevorzugt von etwa 70 bis etwa 50 Gew.-%, bezogen auf die Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon. Ganz besonders bevorzugt ist für die Reaktivharzkomponente (A) eine Mischung aus Zement (insbesondere Aluminatzement (oft auch als Tonerdezement bezeichnet) oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Als Additive finden übliche Additive Verwendung, also Thixotropiermittel, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, weitere Stabilisatoren neben den erfindungsgemäß verwendeten Stabilisatoren und Inhibitoren, Antistatikmittel, Verdickungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Auch nicht reaktive Verdünnungsmittel (Lösungsmittel) können, vorzugsweise in einer Menge bis zu 30 Gew.-%, bezogen auf die Gesamtmenge der Reaktivharzkomponente enthalten sein, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure.

In dieser Hinsicht wird Bezug genommen auf die Anmeldungen WO 02/079341 und WO 02/079293 sowie WO 2011/128061 A1, deren diesbezüglicher Inhalt hiermit in diese Anmeldung aufgenommen wird.

Der Anteil der Additive in der Reaktivharzkomponente kann bis zu etwa 5 Gew.-%, bezogen auf die Reaktivharzkomponente, betragen.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente in der Reaktivharzkomponente (A) enthalten.

Bei einer besonders bevorzugten Ausführungsform des erfindungsgemäßen Reaktivharz-Systems ist das Reaktivharz-System ein Zweikomponenten-System und enthält die Reaktivharzkomponente (A) neben dem Backbone-Harz zusätzlich noch eine hydraulisch abbindende oder polykondensierbare anorganische Verbindung, insbesondere Zement, und die Härterkomponente (B) neben dem Initiator für die Polymerisation des Backbone-Harzes noch Wasser. Derartige Hybridmörtelsysteme sind ausführlich in DE 4231161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. polare, nicht nachbehandelte pyrogene Kieselsäure umfassen.

Des Weiteren ist es besonders bevorzugt, dass die Komponente (A) auch ein Thixotropiermittel enthält, vorzugsweise pyrogene Kieselsäure, wobei auch Mischungen aus unterschiedlichen pyrogenen Kieselsäuren umfasst sein sollen.

In einer bevorzugten Ausführungsform enthält die Reaktivharzkomponente (A) also folglich:
- mindestens ein wie oben definiertes Urethan(meth)acrylat;
- mindestens einen wie oben definierten Inhibitor vom Typ Piperidinyl-*N*-oxyl oder Tetrahydropyrrol-*N*-oxyl, bevorzugt TEMPOL;
- mindestens einen wie oben definierten Beschleuniger, bevorzugt ein Toluidin-Derivat, besonders bevorzugt Di-*iso*-propanol-*p*-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat; und
- Wasser.

In einer bevorzugteren Ausführungsform enthält die Reaktivharzkomponente (A):
- mindestens ein wie oben definiertes Urethan(meth)acrylat;
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-iso-propanol-p-toluidin;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl; und
- Wasser.

In einer noch bevorzugteren Ausführungsform enthält die Reaktivharzkomponente (A):
- mindestens ein wie oben definiertes Urethan(meth)acrylat;
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement; und
- mindestens ein Thixotropiermittel, bevorzugt pyrogene Kieselsäure,
und die Härterkomponente (B) enthält:
- mindestens einen Initiator für die Initiierung der Polymerisation des Urethan(meth)acrylats, bevorzugt Benzoylperoxid (BPO) oder tert-Butylperoxybenzoat;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens ein wie oben definiertes Urethan(meth)acrylat;
- mindestens einen wie oben definierten Inhibitor vom Typ Piperidinyl-*N*-oxyl oder Tetrahydropyrrol-*N*-oxyl, bevorzugt TEMPOL;
- mindestens einen Beschleuniger, bevorzugt ein Toluidin-Derivat, besonders bevorzugt Di-*iso*-propanol-*p*-toluidin;
- mindestens einen weiteren Inhibitor, der ausgewählt ist aus der Gruppe besteht aus Catecholen und Phenothiazinen;
- mindestens eine hydraulisch abbindende oder polykondensierbare anorganische Verbindung, bevorzugt Zement;
- mindestens ein Thixotropiermittel, bevorzugt pyrogene Kieselsäure, und
- mindestens einen weiteren Füllstoff, bevorzugt Quarzsand,
und die Härterkomponente (B) enthält:
- Benzoylperoxid (BPO) oder tert-Butylperoxybenzoat als Initiator für die Initiierung der Polymerisation des Urethan(meth)acrylats;
- mindestens einen Füllstoff, bevorzugt Quarzsand oder Quarzmehl;
- mindestens ein Thixotropiermittel, bevorzugt pyrogene Kieselsäure; und
- Wasser.

In einer noch bevorzugteren Ausführungsform enthält die Reaktivharzkomponente (A):
- mindestens ein wie oben definiertes Urethan(meth)acrylat;
- TEMPOL;
- Di-*iso*-propanol-*p*-toluidin;
- mindestens einen weiteren Inhibitor, der ausgewählt ist aus der Gruppe besteht aus Catecholen und Phenothiazinen;
- Zement;
- pyrogene Kieselsäure; und
- Quarzsand,
und die Härterkomponente (B) enthält:
- mindestens einen Initiator für die Initiierung der Polymerisation des Urethan(meth)acrylats;
- pyrogene Kieselsäure;
- Quarzsand oder Quarzmehl und
- Wasser.

In jeder dieser Ausführungsformen enthält in einer bevorzugten Ausführungsform die Reaktivharzkomponente (A) zusätzlich noch mindestens einen Reaktivverdünner. Bevorzugt ist dieser Reaktivverdünner ein Monomer oder eine Mischung aus mehreren Monomeren des Backbone-Harzes.

Die Reaktivharzkomponenten (A) und die Härterkomponenten (B) in jeder dieser Ausführungsformen sind beliebig miteinander kombinierbar.

In einer besonders bevorzugten Ausführungsform sind die Bestandteile des erfindungsgemäßen Reaktivharzes bzw. der erfindungsgemäßen Reaktivharzkomponente eines oder mehrere der Bestandteile, welche in den erfindungsgemäßen Beispielen genannt werden. Ganz besonders bevorzugt sind Reaktivharze bzw. Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in den dort genannten Anteilen.

Das nach dem erfindungsgemäßen Verfahren hergestellte, erfindungsgemäße Reaktivharz sowie die erfindungsgemäße Reaktivharzkomponente (A), welche dieses Reaktivharz enthält, und das erfindungsgemäße Reaktivharz-System, welches diese Reaktivharzkomponente als eine Komponente umfasst, zeichnen sich durch eine besonders geringe Reaktivitätsdrift, eine besonders geringe Gelzeitdrift und eine gute Lagerstabilität aus.

Die Reaktivitätsdrift und die Gelzeitdrift, oder eine dieser beiden Kennzahlen, sind bei den erfindungsgemäßen Zusammensetzungen geringer als bei Zusammensetzungen mit denselben Komponenten, bei deren Herstellung das TEMPOL sofort unmittelbar nach Abschluss der Reaktion zum Backbone-Harz zugesetzt wurde.

Die erfindungsgemäß hergestellten Reaktivharze sind in vielen Bereichen, bei denen sonst üblicherweise ungesättigte Polyesterharze, Vinylesterharze oder Vinylesterurethanharze Verwendung finden, einsetzbar. Sie können insbesondere zur Herstellung von Reaktivharzmörteln für bauliche Anwendungen, wie die chemische Befestigung verwendet werden.

Das erfindungsgemäße Reaktivharz findet üblicherweise Verwendung als Harzbestandteil in der Reaktivharzkomponente eines Mehrkomponenten-Systems, typischerweise einem Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet sie sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Ein weiterer Gegenstand der Erfindung ist die Verwendung des erfindungsgemäßen Reaktivharzes als Bestandteil eines aushärtbaren Bindemittels oder als aushärtbares Bindemittel, insbesondere zur Befestigung von Verankerungsmitteln in Bohrlöchern verschiedenen Untergrunds und zum baulichen Kleben. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Die Erfindung wird im Folgenden anhand einer Reihe von Beispielen und Abbildungen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### BEISPIELE

Alle hier aufgelisteten Bestandteile der Zusammensetzungen sind - soweit nicht anders angegeben - kommerziell erhältlich und wurden in der kommerziell üblichen Qualität eingesetzt.

### Messung der Harzreaktivität

Gemessen wurde die Reaktivitätsdauer. Darunter versteht man die Harzreaktivität (*t*_{r,25} → 80°C) eines Harzes oder einer Harz-haltigen Zusammensetzung ausgedrückt als die Zeitspanne gemessen vom Zeitpunkt der Zugabe eines Initiators zur Initialisierung der Härtung an bis zu dem Zeitpunkt, bei dem die Zusammensetzung eine Temperatur von 80°C erreicht hat. Die Messung erfolgte wie folgt:
Die Reaktivitätsdauer, also die Harzreaktivität *t_{r,25} → 80°C* nach Zugabe des Initiators (beispielsweise Perkadox 20S in den Beispielen 1 und 2) zu dem Harz oder der Harz-haltigen Zusammensetzung, wurde mit einem herkömmlichen Gerät (Geltimer, Fa. WKS Informatik) bei einer Starttemperatur von 25°C bestimmt. Die Mischung wurde hierzu nach Zugabe des Initiators bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in der Mischung auf und ab bewegt. Die Harzreaktivität entspricht der Zeitspanne nach Zugabe des Initiators, nach der eine Temperatur von 80°C in der Mischung gemessen wurde.

### Messung der Gelzeit

Gemessen wurde die Gelzeit (*t*_{*m,*25} → 35°C) eines Harzes oder einer Harz-haltigen Zusammensetzung ausgedrückt als die Zeitspanne gemessen vom Zeitpunkt der Zugabe eines Initiators zur Initialisierung der Härtung an bis zu dem Zeitpunkt, bei dem die Zusammensetzung eine Temperatur von 35°C erreicht hat. Die Messung erfolgte wie folgt:
Die Gelzeit (*t*_{*m,*25} → 35°C) nach Zugabe des Initiators (beispielsweise der Härterkomponente in Beispiel 3) zu der Harz-haltigen Zusammensetzung wurde mit einem herkömmlichen Gerät (Geltimer, Fa. WKS Informatik) bei einer Starttemperatur von 25°C bestimmt. Die Mischung wurde hierzu nach Zugabe des Initiators bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in der Mischung auf und ab bewegt. Die Gelzeit entspricht der Zeitspanne nach Zugabe des Initiators, nach der eine Temperatur von 35°C in der Mischung gemessen wurde.

### Beispiel 1.1:

Ein Reaktivharz-Masterbatch, der ein Urethanmethacrylat-Backbone-Harz enthält, wurde durch Zutropfen über einen Zeitraum von ca. 2,25 h von 2,101 t polymerem MDI (Desmodur 44V20L der Firma Bayer) zu 4,6347 t HPMA (Visiomer HPMA 98 der Fa. Evonik) unter Einwirkung eines Zinnkatalysators (0,016 Gew-% bezogen auf das final resultierende Reaktivharz, TIB KAT 216, Dioctylzinndilaurat der Firma TIB Chemicals) und von Phenothiazine D Prills (0,015 Gew-% bezogen auf das final resultierende Reaktivharz, Allessa) und TEMPOL (0,02 Gew-% bezogen auf das final resultierende Reaktivharz, Evonik) als Prozessstabilisatoren, welche alle in dem HPMA vorgelegt wurden, bei einer Temperatur von 65 °C bis 75 °C hergestellt und danach bis zu seiner weiteren Versetzung mit TEMPOL bei 60°C weiter gerührt.

Direkt anschließend an diese Reaktion zur Herstellung des Backbone-Harzes, oder 1 h, 3,25 h, 5 h oder 23,5 h nach Beendigung der Reaktion wurde der entstandene Reaktivharz-Masterbatch zur Herstellung des Reaktivharzes bei 60 °C mit TEMPOL (0,31 Gew.-% bezogen auf das final resultierende Reaktivharz) versetzt und 15 min gerührt. Anschließend wurden erst Di-*iso*-propanol-*p*-toluidin (1,8 Gew.-% bezogen auf das final resultierende Reaktivharz) und dann Catechol (0,15 Gew.-% bezogen auf das final resultierende Reaktivharz) zugegeben und 30 min unter Rühren bei gleichbleibender Temperatur gelöst. Im Anschluss wurden HPMA (25,27 Gew-% bezogen auf das final resultierende Reaktivharz, Visiomer HPMA 98 der Fa. Evonik) und BDDMA (5,35 Gew-% bezogen auf das final resultierende Reaktivharz, 1,4-Butandioldimethacrylat, Visiomer BDDMA, Fa. Evonik) zudosiert. Der gesamte Reaktionsansatz wurde unter Rühren auf 30 °C ± 1°C abgekühlt.

50 g-Proben des so hergestellten Reaktivharzes wurden über 45 min bei 25 °C temperiert. Zur Messung der Harzreaktivität dieser Proben wurden die Proben bei 25°C jeweils mit 15 g Perkadox 20S (AkzoNobel) gemischt und die Zeitspanne *t_{r,25}* → 80°C, bis die härtende Mischung 80°C erreicht hatte, gemessen. Die Ergebnisse sind in Tabelle 1 wiedergegeben:

**Tab.1: Verlängerung der Reaktivitätsdauer mit der Zeit bis zur TEMPOL-Zugabe**

| Zeit bis TEMPOL-Zugabe [h] | t_{r,25} → 80°C [min] |
|---|---|
| 0 | 6,8 |
| 1 | 7,2 |
| 3,25 | 7,7 |
| 5 | 7,8 |
| 23,5 | 7,9 |

Es ist gut erkennbar, dass die Reaktivitätsdauer t_{r,25} → 80°C mit zunehmendem Abstand der TEMPOL-Zugabe vom Ende der Reaktion zur Herstellung des Backbone-Harzes ansteigt und dass dieser Anstieg einen asymptotischen Verlauf hat.

### Beispiel 1.2:

Ein Reaktivharz-Masterbatch, der ein Urethanmethacrylat-Backbone-Harz enthält, wurde durch Zutropfen über einen Zeitraum von ca. 2,25 h von 2,101 t polymerem MDI (Desmodur 44V20L der Firma Bayer) zu 4,6347 t HPMA (Visiomer HPMA 98 der Firma Evonik) unter Einwirkung eines Zinnkatalysators (0,016 Gew-% bezogen auf das final resultierende Reaktivharz, TIB KAT 216, Dioctylzinndilaurat der Firma TIB Chemicals) und von Phenothiazine D Prills (0,015 Gew-% bezogen auf das final resultierende Reaktivharz, Allessa) und TEMPOL (0,02 Gew-% bezogen auf das final resultierende Reaktivharz, Evonik) als Prozessstabilisatoren, welche alle in dem HPMA vorgelegt wurden, bei einer Temperatur von 65 °C bis 75 °C hergestellt. Der resultierende Reaktivharz-Masterbatch wurde danach bis zu seiner weiteren Versetzung mit TEMPOL bei 75°C weiter gerührt.

1h nach Beendigung der Reaktion zur Herstellung des Backbone-Harzes wurde der entstandene Reaktivharz-Masterbatch bei 75 °C mit TEMPOL (0,31-Gew.-% bezogen auf das final resultierende Reaktivharz) versetzt und 15 min gerührt. Anschließend wurden erst Di-*iso*-propanol-*p*-toluidin (1,8 Gew.-% bezogen auf das final resultierende Reaktivharz) und dann Catechol (0,15 Gew.-% bezogen auf das final resultierende Reaktivharz) zugegeben und 30 min bei gleichbleibender Temperatur unter Rühren gelöst. Im Anschluss wurden 1,4-BDDMA (5,35 Gew-% bezogen auf das final resultierende Reaktivharz, Visiomer BDDMA der Fa. Evonik) und HPMA (25,27 Gew-% bezogen auf das final resultierende Reaktivharz, Visiomer HPMA 98 der Fa. Evonik) zudosiert. Der gesamte Reaktionsansatz wurde unter Rühren auf 30°C ± 1°C abgekühlt. Eine 50 g-Probe des so hergestellten Reaktivharzes wurde über 45 min bei 25 °C temperiert. Die Reaktivitätsdauer *t_{r,25} → 80°C* dieser Probe wurde mittels Härtung mit 15 g Perkadox 20S (AkzoNobel) gemessen und betrug 6,3 min.

Die Reaktivitätsdauer *t_{r,25} → 80°C* wurde also im Vergleich zu der 1h-Probe aus Beispiel 1.1, welche ansonsten identisch behandelt wurde, nur wegen der erhöhten Temperatur vor und nach der Zugabe des TEMPOL deutlich verringert. Bei erhöhter Temperatur wird vermutlich mehr TEMPOL in kürzerer Zeit abgebaut, so dass es zu einer Verkürzung der Reaktivitätsdauer kommt, was nachteilig sein kann.

### Beispiel 2.1:

Ein Reaktivharz-Masterbatch, der ein Urethanmethacrylat-Backbone-Harz enthält, wurde durch Zutropfen über einen Zeitraum von ca. 2,25 h von 2,101 t polymerem MDI (Desmodur 44V20L der Firma Bayer) zu 4,6347 t HPMA (Visiomer HPMA 98 der Firma Evonik) unter Einwirkung eines Zinnkatalysators (0,016 Gew-% bezogen auf das final resultierende Reaktivharz, TIB KAT 216, Dioctylzinndilaurat der Firma TIB Chemicals) und von Phenothiazine D Prills (0,015 Gew-% bezogen auf das final resultierende Reaktivharz, Allessa) und TEMPOL (0,02 Gew-% bezogen auf das final resultierende Reaktivharz, Evonik) als Prozessstabilisatoren, welche alle in dem HPMA vorgelegt wurden, bei einer Temperatur von 65 °C bis 75 °C hergestellt. Der resultierende Reaktivharz-Masterbatch wurde danach bis zu seiner Versetzung mit Di-*iso*-propanol-*p*-toluidin bei 60°C weiter gerührt.

15 min nach Beendigung der Reaktion zur Herstellung des Backbone-Harzes wurde der Reaktivharz-Masterbatch bei 60 °C mit Di-*iso*-propanol-*p*-toluidin (1,8 Gew.-% bezogen auf das final resultierende Reaktivharz) und dann Catechol (0,147 Gew.-% bezogen auf das final resultierende Reaktivharz) versetzt und 30 min bei gleichbleibender Temperatur unter Rühren gelöst. Die Mischung wurde nach Beendigung der Reaktion also insgesamt 45 min (Nachreaktionszeit) bei 60°C (Nachreaktionstemperatur) gerührt. Im Anschluss wurden 1,4-BDDMA (5,35 Gew-% bezogen auf das final resultierende Reaktivharz, Visiomer BDDMA der Fa. Evonik) und HPMA (25,27 Gew-% bezogen auf das final resultierende Reaktivharz, Visiomer HPMA 98 der Fa. Evonik) zudosiert. Anschließend wurde der gesamte Reaktionsansatz unter Rühren auf 30°C ± 1°C abgekühlt (Dauer 2,25 h). Dann wurde TEMPOL (0,275-Gew.-% bezogen auf das final resultierende Reaktivharz) zugesetzt. Somit erfolgte die TEMPOL-Zugabe erst 3 h nach Beendigung der Reaktion zur Herstellung des Backbone-Harzes. Das TEMPOL wurde für 45 min unter Rühren gelöst, dabei wurde die Probe langsam auf Raumtemperatur (25°C) abgekühlt. Nach Verstreichen der in Tab. 2 angegebenen Zeiträume nach Erreichen der Raumtemperatur wurde jeweils eine 50 g-Probe des so hergestellten Reaktivharzes über 45 min bei 25 °C temperiert. Die Reaktivitätsdauer *t_{r,25} → 80°C* jeder Probe wurde anschließend mittels Härtung mit 15 g Perkadox 20S (AkzoNobel) gemessen. Die Ergebnisse sind in Tabelle 2 wiedergegeben:

**Tab. 2: Reaktivitätsdauer in Abhängigkeit vom verstrichenen Zeitraum seit Erreichen von Raumtemperatur**

| Zeit, nachdem die Probe Raumtemperatur erreicht hatte [d] | t_{r,25} → 80°C [min] |
|---|---|
| 0,04 | 6,2 |
| 1 | 5,5 |
| 2 | 5,3 |
| 6 | 5,4 |

Es ist zu erkennen, dass die Reaktivitätsdauer t_{r,25} → 80°C mit zunehmender Zeit seit Erreichen der Raumtemperatur geringer wurde, also eine Reaktivitätsdrift stattfand.

### Beispiel 2.2:

Ein Reaktivharz-Masterbatch, der ein Urethanmethacrylat-Backbone-Harz enthält, wurde durch Zutropfen über einen Zeitraum von ca. 2,25 h von 2,101 t polymerem MDI (Desmodur 44V20L der Firma Bayer) zu 4,6347 t HPMA (Visiomer HPMA 98 der Firma Evonik) unter Einwirkung eines Zinnkatalysators (0,016 Gew-% bezogen auf das final resultierende Reaktivharz, TIB KAT 216, Dioctylzinndilaurat der Firma TIB Chemicals) und von Phenothiazine D Prills (0,015 Gew-% bezogen auf das final resultierende Reaktivharz, Allessa) und TEMPOL (0,02 Gew-% bezogen auf das final resultierende Reaktivharz, Evonik) als Prozessstabilisatoren, welche alle in dem HPMA vorgelegt wurden, bei einer Temperatur von 85 °C bis 105 °C hergestellt. Der resultierende Reaktivharz-Masterbatch wurde danach bis zu seiner Versetzung mit Di-*iso*-propanol-*p*-toluidin bei 85°C weiter gerührt.

15 min nach Beendigung der Reaktion zur Herstellung des Backbone-Harzes wurde der Reaktivharz-Masterbatch bei 85 °C mit Di-*iso*-propanol-*p*-toluidin (1,8 Gew.-% bezogen auf das final resultierende Reaktivharz) und dann Catechol (0,147 Gew.-% bezogen auf das final resultierende Reaktivharz) versetzt und 30 min bei gleichbleibender Temperatur unter Rühren gelöst. Die Mischung wurde nach Beendigung der Reaktion also insgesamt 45 min (Nachreaktionszeit) bei 85°C (Nachreaktionstemperatur) gerührt. Im Anschluss wurden BDDMA (5,35 Gew-% bezogen auf das final resultierende Reaktivharz, Visiomer BDDMA der Fa. Evonik) und HPMA (25,27 Gew-% bezogen auf das final resultierende Reaktivharz, Visiomer HPMA 98 der Fa. Evonik) zudosiert. Anschließend wurde der gesamte Reaktionsansatz unter Rühren auf 30°C ± 1°C abgekühlt (Dauer 2,25 h). Dann wurde TEMPOL (0,275-Gew.-% bezogen auf das final resultierende Reaktivharz) zugesetzt. Somit erfolgte die TEMPOL-Zugabe erst 3 h nach Beendigung der Reaktion zur Herstellung des Backbone-Harzes. Das TEMPOL wurde für 45 min unter Rühren gelöst, dabei wurde die Probe langsam auf Raumtemperatur (25°C) abgekühlt. Nach Verstreichen der in Tab. 3 angegebenen Zeiträume nach Erreichen der Raumtemperatur wurde jeweils eine 50 g-Probe des so hergestellten Reaktivharzes über 45 min bei 25 °C temperiert. Die Reaktivitätsdauer *t_{r,25} → 80°C* dieser Probe wurde anschließend mittels Härtung mit 15 g Perkadox 20S (AkzoNobel) gemessen. Die Ergebnisse sind in Tabelle 3 wiedergegeben:

**Tab. 3: Reaktivitätsdauer in Abhängigkeit vom verstrichenen Zeitraum seit Erreichen von Raumtemperatur**

| Zeit, nachdem die Probe Raumtemperatur erreicht hatte [d] | *t_{r,25} → 80°C* [min] |
|---|---|
| 0,04 | 6,4 |
| 0,08 | 6,2 |
| 0,71 | 6,2 |
| 1 | 6,1 |
| 5 | 6,1 |

Es ist zu erkennen, dass die Reaktivitätsdauer t_{r,25} → 80°C zwar mit zunehmender Zeit seit Erreichen der Raumtemperatur geringer wurde. Jedoch fiel diese Verringerung (Reaktivitätsdrift) sehr viel weniger stark aus als in Beispiel 2.1, was vorteilhaft ist. Dies dürfte an der höheren Herstellungstemperatur des Backbone-Harzes und/oder der höheren anfänglichen Nachreaktionstemperatur (also der Temperatur, auf der die Mischung nach Abschluss der Reaktion zum Backbone-Harz gehalten wird) liegen. Der resultierende Reaktivharz-Masterbatch enthält vermutlich weniger Verunreinigungen, die den schnellen Abbau von TEMPOL fördern, als der Reaktivharz-Masterbatch in Beispiel 2.1

### Beispiel 3.1: Referenzverfahren

1,848 t HPMA (Visiomer HPMA 98 der Fa. Evonik) wurde in einem 12 m³ Reaktor vorgelegt. Dazu wurden dieselben Prozessstabilisatoren und derselbe Zinnkatalysator in denselben Mengen wie in Beispiel 1.1 gegeben und der Ansatz wurde auf ca. 60 °C erwärmt. Danach wurden über einen Zeitraum von ca. 0,9 h unter Rühren 837,6 kg polymeres MDI (Desmodur 44V20L der Firma Bayer) zugetropft. Dabei wurde die Temperatur durch Kühlen auf einem Wert von 65-75 °C gehalten. Nach dem Zutropfen wurde der Ansatz bei dieser Temperatur ("Nachreaktionstemperatur") für ca. 45 min gerührt ("Nachreaktionsdauer"). Nun wurde zuerst 12,4 kg (0,31 Gew-% bezogen auf das final resultierende Reaktivharz) TEMPOL (Fa. Evonik), dann 72 kg *N,N*-Di-*iso*-propyltoluidin (Fa. Saltigo) und danach 6 kg (0,15 Gew-% bezogen auf das final resultierende Reaktivharz) Catechol (Fa. Rhodia) zugegeben und bei dieser Temperatur gelöst. Nachdem die Stoffe gelöst waren, wurden 214 kg 1,4-BDDMA (Visiomer BDDMA der Fa. Evonik) zugegeben und dann weitere 1,008 t HPMA (Visiomer HPMA 98 der Fa. Evonik). Durch die Zugabe sank die Temperatur des Reaktorinhalts auf ca. 55 °C ab. Der Ansatz wurde nun aktiv auf Raumtemperatur (25°C) gekühlt.

### Beispiel 3.2: Erniedrigung der Nachreaktionstemperatur und Verlängerung der Nachreaktionsdauer

Unterschiede zum Referenzverfahren aus Beispiel 3.1: Erniedrigung der Nachreaktionstemperatur von im Mittel ca. 70 °C auf im Mittel ca. 60 °C und Verlängerung der Nachreaktionsdauer von 0,75 h (45 min) auf 8 h.

69,29 kg HPMA (Visiomer HPMA 98 der Fa. Evonik) wurde in einem 300 kg Reaktor vorgelegt. Dazu wurden dieselben Prozessstabilisatoren und derselbe Zinnkatalysator in denselben Mengen wie in Beispiel 1.1 gegeben und der Ansatz wurde auf 80 °C erwärmt. Danach wurden über einen Zeitraum von ca. 70 min unter Rühren 31,41 kg polymeres MDI (Desmodur 44V20L der Firma Bayer) zugetropft. Dabei wurde die Temperatur durch Kühlen auf einem Wert von ca. 70-75 °C gehalten. Nach dem Zutropfen wurde der Ansatz auf 60 °C gekühlt (Nachreaktionstemperatur) und für ca. 8 h (Nachreaktionsdauer) bei einer Temperatur von 58-62 °C gerührt. Nach dieser Zeit wurde zuerst 0,412 kg (0,275 Gew-% bezogen auf das final resultierende Reaktivharz) TEMPOL (Fa. Evonik), dann 2,7 kg *N*,*N-*Di-iso-propyltoluidin (Fa. Saltigo) und dann 0,221 kg (0,147 Gew-% bezogen auf das final resultierende Reaktivharz) Catechol (Fa. Rhodia) in dem Ansatz bei dieser Temperatur gelöst. Nun wurden 8,025 kg 1,4-BDDMA (Visiomer BDDMA der Fa. Evonik) zugegeben und dann weitere 37,874 kg HPMA (Visiomer HPMA 98 der Fa. Evonik). Durch die Zugabe sank die Temperatur des Reaktorinhalts auf ca. 48 °C ab. Der Ansatz wurde nun aktiv auf Raumtemperatur (25°C) gekühlt.

### Beispiel 3.3: Erhöhung der Nachreaktionstemperatur und Verlängerung der Nachreaktionsdauer

Unterschiede zum Referenzverfahren aus Beispiel 3.1: Erhöhung der Nachreaktionstemperatur von im Mittel ca. 70 °C auf im Mittel ca. 81 °C und Verlängerung der Nachreaktionsdauer von 0,75 h (45 min) auf 6 h.

4,619 t HPMA (Visiomer HPMA 98 der Fa. Evonik) wurde in einem 12 m³ Reaktor vorgelegt. Dazu wurden dieselben Prozessstabilisatoren und derselbe Zinnkatalysator in denselben Mengen wie in Beispiel 1.1 gegeben und der Ansatz wurde auf ca. 60 °C erwärmt. Danach wurden über einen Zeitraum von ca. 2,25 h unter Rühren 2,094 t polymeres MDI (Desmodur 44V20L der Firma Bayer) zugetropft. Dabei wurde die Temperatur durch Kühlen auf einem Wert von 65-75 °C gehalten. Nach dem Zutropfen wurde der Ansatz bei 75-86 °C (Nachreaktionstemperatur) für 6 h gerührt (Nachreaktionsdauer). Nun wurde zuerst 28 kg (0,28 Gew-% bezogen auf das final resultierende Reaktivharz) TEMPOL (Fa. Evonik), dann 180 kg *N,N*-Di-*iso*-propyltoluidin (Fa. Saltigo) und danach 14,8 kg (0,148 Gew-% bezogen auf das final resultierende Reaktivharz) Catechol (Fa. Rhodia) zugegeben und bei dieser Temperatur gelöst. Nachdem die Stoffe gelöst waren, wurden 535 kg 1,4-BDDMA (Visiomer BDDMA der Fa. Evonik) zugegeben und dann weitere 2,542 t HPMA (Visiomer HPMA 98 der Fa. Evonik). Durch die Zugabe sank die Temperatur des Reaktorinhalts auf ca. 62 °C ab. Der Ansatz wurde nun aktiv auf Raumtemperatur (25°C) gekühlt.

### Beispiel 3.4: TEMPOL-Zugabe um 3 h verlagert und bei erniedrigter Temperatur, Erhöhung der Synthesemaximaltemperatur, Erhöhung der Nachreaktionstemperatur, Verlängerung der Nachreaktionsdauer

Unterschiede zum Referenzverfahren aus Beispiel 3.1: Erhöhung der Synthesemaximaltemperatur um ca. 30 °C, Erhöhung der Nachreaktionstemperatur von im Mittel ca. 70 °C auf im Mittel ca. 95 °C und Verlängerung der Nachreaktionsdauer von 0,75 h (45 min) auf 2,5 h, Verlagerung der Zugabe von TEMPOL um ca. 3 h nach hinten und anstelle von bei einer Temperatur von ca. 60 °C bei einer Temperatur von ca. 30 °C.

69,29 kg HPMA (Visiomer HPMA 98 der Fa. Evonik) wurde in einem 300 kg Reaktor vorgelegt. Dazu wurden dieselben Prozessstabilisatoren und derselbe Zinnkatalysator in denselben Mengen wie in Beispiel 1.1 gegeben und der Ansatz wurde auf 80 °C erwärmt. Danach wurden über einen Zeitraum von ca. 70 min unter Rühren 31,41 kg polymeres MDI (Desmodur 44V20L der Firma Bayer) zugetropft. Dabei stieg die Temperatur auf 107 °C. Nach dem Zutropfen wurde der Ansatz ohne aktive Kühlung für ca. 2,5 h gerührt. Die Temperatur fiel in den ersten 30 min in dieser Zeit auf 100 °C. Ab diesem Zeitpunkt fiel die Temperatur in den folgenden 2 h linear von 100 °C auf ca. 87 °C ab. Die Nachreaktionsdauer ist die Zeit ab Beginn des Temperaturabfalls, also 2,5 h. In dieser Zeit fiel die Temperatur von 107°C auf 87°C ab. Die mittlere Nachreaktionstemperatur war 95°C. Nach dieser Zeit wurde zuerst 2,7 kg *N,N*-Di-*iso*-propyltoluidin (Fa. Saltigo) und dann 0,221 kg (0,147 Gew-% bezogen auf das final resultierende Reaktivharz) Catechol (Fa. Rhodia) in dem Ansatz bei dieser Temperatur gelöst. Nun wurden 8,025 kg 1,4-BDDMA (Visiomer BDDMA der Fa. Evonik) zugegeben und dann weitere 37,874 kg HPMA (Visiomer HPMA 98 der Fa. Evonik). Durch die Zugabe sank die Temperatur des Reaktorinhalts auf 70 °C ab. Der Ansatz wurde nun aktiv auf 30 °C gekühlt, was ca. 1 h in Anspruch nahm. Nach dieser Zeit wurden 0,412 kg (0,275 Gew-% bezogen auf das final resultierende Reaktivharz) TEMPOL (Fa. Evonik) zugefügt und in den nächsten 1,5 h bei dieser Temperatur gelöst. Danach wurde der Ansatz auf Raumtemperatur (25°C) gekühlt.

### Beispiel 3.5: TEMPOL-Zugabe um 5 h verlagert und bei erniedrigter Temperatur, Erhöhung der Synthesemaximaltemperatur, Erhöhung der Nachreaktionstemperatur, Verlängerung der Nachreaktionsdauer

Unterschiede zum Referenzverfahren aus Beispiel 3.1: Erhöhung der Synthesemaximaltemperatur um ca. 35 °C, Erhöhung der Nachreaktionstemperatur von im Mittel ca. 70 °C auf im Mittel ca. 105 °C und Verlängerung der Nachreaktionsdauer von 0,75 h auf 2,5 h, Verlagerung der Zugabe von TEMPOL um ca. 5 h nach hinten und anstelle von bei einer Temperatur von ca. 60 °C bei einer Temperatur von ca. 30 °C.

2,310 t HPMA (Visiomer HPMA 98 der Fa. Evonik) wurde in einem 12 m³ Reaktor vorgelegt. Dazu wurden dieselben Prozessstabilisatoren und derselbe Zinnkatalysator in denselben Mengen wie in Beispiel 1.1 gegeben und der Ansatz wurde auf ca. 60 °C erwärmt. Danach wurden über einen Zeitraum von ca. 1,25 h unter Rühren 1,047 t polymeres MDI (Desmodur 44V20L der Firma Bayer) zugetropft. Dabei wurde die Temperatur durch Kühlen auf einem Wert von 105-112 °C gehalten. Nach dem Zutropfen wurde der Ansatz bei 100-110 °C (Nachreaktionstemperatur) für 2,5 h gerührt (Nachreaktionsdauer). Nun wurde für 0,75 h auf ca. 80 °C gekühlt. Jetzt wurden 267,5 kg 1,4-BDDMA (Visiomer BDDMA der Fa. Evonik) zugegeben und dann weitere 1,262 t HPMA (Visiomer HPMA 98 der Fa. Evonik). Durch die Zugabe sank die Temperatur des Reaktorinhalts auf ca. 62 °C ab. Nun wurden 90 kg *N*,*N-*Di-iso-propyltoluidin (Fa. Saltigo) und danach 7,4 kg (0,148 Gew-% bezogen auf das final resultierende Reaktivharz) Catechol (Fa. Rhodia) bei dieser Temperatur gelöst. Der Ansatz wurde nun aktiv auf 30 °C gekühlt und 14 kg (0,28 Gew-% bezogen auf das final resultierende Reaktivharz) TEMPOL (Fa. Evonik) wurden bei dieser Temperatur gelöst. Danach wurde der Ansatz auf Raumtemperatur (25°C) gekühlt.

### Beispiel 3.6: TEMPOL-Zugabe um 5,5 h verlagert und bei erniedrigter Temperatur, Erhöhung der Synthesemaximaltemperatur, Erhöhung der Nachreaktionstemperatur, Verlängerung der Nachreaktionsdauer

Unterschiede zum Referenzverfahren aus Beispiel 3.1: Erhöhung der Synthesemaximaltemperatur um ca. 35 °C, Erhöhung der Nachreaktionstemperatur von im Mittel ca. 70 °C auf im Mittel ca. 110 °C und Verlängerung der Nachreaktionsdauer von 0,75 h auf 2 h, Verlagerung der Zugabe von TEMPOL um ca. 5,5 h nach hinten und anstelle von bei einer Temperatur von ca. 60 °C bei einer Temperatur von ca. 30 °C.

4,619 t HPMA (Visiomer HPMA 98 der Fa. Evonik) wurde in einem 12 m³ Reaktor vorgelegt. Dazu wurden dieselben Prozessstabilisatoren und derselbe Zinnkatalysator in denselben Mengen wie in Beispiel 1.1 gegeben und der Ansatz wurde auf ca. 60 °C erwärmt. Danach wurden über einen Zeitraum von ca. 2,25 h unter Rühren 2,094 t polymeres MDI (Desmodur 44V20L der Firma Bayer) zugetropft. Dabei wurde die Temperatur durch Kühlen auf einem Wert von 110-112 °C gehalten. Nach dem Zutropfen wurde der Ansatz bei 110-112 °C (Nachreaktionstemperatur) für 2 h gerührt (Nachreaktionsdauer). Nun wurde für 0,5 h auf ca. 88 °C gekühlt. Jetzt wurden 535 kg 1,4-BDDMA (Visiomer BDDMA der Fa. Evonik) zugegeben und dann weitere 2,527 t HPMA (Visiomer HPMA 98 der Fa. Evonik). Durch die Zugabe sank die Temperatur des Reaktorinhalts auf ca. 62 °C ab. Nun wurden 180 kg *N*,*N-*Di-iso-propyltoluidin (Fa. Saltigo) und danach 14,6 kg (0,146 Gew-% bezogen auf das final resultierende Reaktivharz) Catechol (Fa. Rhodia) bei dieser Temperatur gelöst. Der Ansatz wurde nun aktiv auf 30 °C gekühlt und 25 kg (0,25 Gew-% bezogen auf das final resultierende Reaktivharz) TEMPOL (Fa. Evonik) wurden bei dieser Temperatur gelöst. Danach wurde der Ansatz auf Raumtemperatur (25°C) gekühlt.

### Beispiel 3.7: TEMPOL-Zugabe um 6 h verlagert und bei erniedrigter Temperatur, Erhöhung der Synthesemaximaltemperatur, Erhöhung der Nachreaktionstemperatur, Verlängerung der Nachreaktionsdauer

Unterschiede zum Referenzverfahren aus Beispiel 3.1: Erhöhung der Synthesemaximaltemperatur um ca. 35 °C, Erhöhung der Nachreaktionstemperatur von im Mittel ca. 70 °C auf im Mittel ca. 108 °C und Verlängerung der Nachreaktionsdauer von 0,75 h (45 min) auf 2,5 h, Verlagerung der Zugabe von TEMPOL um ca. 6 h nach hinten und anstelle von bei einer Temperatur von ca. 60 °C bei einer Temperatur von ca. 30 °C.

4,619 t HPMA (Visiomer HPMA 98 der Fa. Evonik) wurde in einem 12 m³ Reaktor vorgelegt. Dazu wurden dieselben Prozessstabilisatoren und derselbe Zinnkatalysator in denselben Mengen wie in Beispiel 1.1 gegeben und der Ansatz wurde auf ca. 60 °C erwärmt. Danach wurden über einen Zeitraum von ca. 2,25 h unter Rühren 2,094 t polymeres MDI (Desmodur 44V20L der Firma Bayer) zugetropft. Dabei wurde die Temperatur durch Kühlen auf einem Wert von 110-112 °C gehalten. Nach dem Zutropfen wurde der Ansatz bei 108-112 °C (Nachreaktionstemperatur) für 2,5 h gerührt (Nachreaktionsdauer). Nun wurde für 0,5 h auf ca. 85 °C gekühlt. Jetzt wurden 535 kg 1,4-BDDMA (Visiomer BDDMA der Fa. Evonik) zugegeben und dann weitere 2,527 t HPMA (Visiomer HPMA 98 der Fa. Evonik). Durch die Zugabe sank die Temperatur des Reaktorinhalts auf ca. 60 °C ab. Nun wurden 180 kg *N*,*N-*Di-iso-propyltoluidin (Fa. Saltigo) und danach 14,6 kg (0,146 Gew-% bezogen auf das final resultierende Reaktivharz) Catechol (Fa. Rhodia) bei dieser Temperatur gelöst. Der Ansatz wurde nun aktiv auf 30 °C gekühlt und 25 kg (0,25 Gew-% bezogen auf das final resultierende Reaktivharz) TEMPOL (Fa. Evonik) wurden bei dieser Temperatur gelöst. Danach wurde der Ansatz auf Raumtemperatur (25°C) gekühlt.

### Beispiel 3.8: Weiterverarbeitung der Reaktivharze und Messung der Gelzeiten

Jedes der in den Beispielen 3.1 bis 3.7 hergestellten Reaktivharze (jeweils zu 43 Gew.-%) wurde mit Sand (Strobel; P10, 36 Gew.-%), Zement (Kerneos Inc.; Secar 80, 18 Gew.-%) und pyrogener Kieselsäure (Cabot, TS-720, 3 Gew.-%) zu einer thixotropen Reaktivharzkomponente homogenisiert und in Folie verpackt. Diese verpackte Reaktivharzkomponente wurde mit einer ebenfalls in Folie verpackten Dibenzoylperoxidenthaltenden Härterkomponente (Härterkomponente des Hybridinjektionsmörtels HIT MM Plus der Fa. HILTI) zu einem Foliengebinde kombiniert. Die beiden Komponenten wurden mittels eines Statikmischers und eines Dispensers vermischt, und dadurch wurde die radikalische Härtung in Gang gesetzt. Dabei wurde ab Mischung der Komponenten, die zuvor auf eine Temperatur von 25 °C temperiert wurden, die Härtung durch die im Harz enthaltenden Inhibitoren TEMPOL und Catechol verzögert. Die Länge dieser Verzögerung ist abhängig von der zum Zeitpunkt der radikalischen Härtung (noch) vorhandenen Menge dieser Inhibitoren. Auf diese Menge und somit auch auf die Gelzeit hat der erfindungsgemäße Herstellungsprozess für das Reaktivharz eine Auswirkung, ebenso wie die Lagerungsdauer des Foliengebindes und die Lagerungstemperatur. Um die Verkürzung der Gelzeit während der Lagerung (im Folgenden Gelzeitdrift genannt) zu bestimmen, wurden Foliengebinde für eine bestimmte Dauer bei 23 °C oder 40 °C gelagert und nach Ablauf dieser Dauer wie oben beschrieben gehärtet. Die Gelzeit wurde dabei wie oben beschrieben mittels eines Geltimers, der den thermischen Verlauf der Härtungsreaktion aufzeichnet, bestimmt. Dabei wurden die auf 25 °C temperierten Foliengebinde mit einem ebenfalls temperierten Statikmischer in einem auf 25 °C temperierten Bad gemischt. Der Zeitpunkt, zu dem die Mischung der Komponenten eine Temperatur von 35 °C überschritt, wird Gelzeit genannt und folgendermaßen abgekürzt: t_{m,25}→35°C.

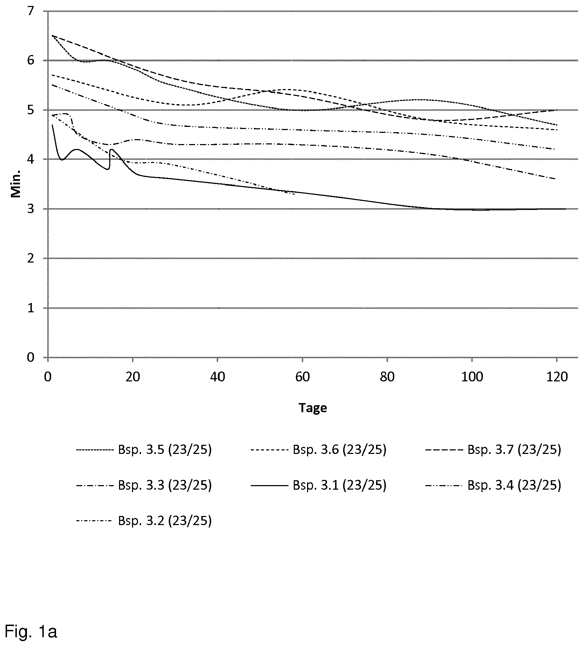

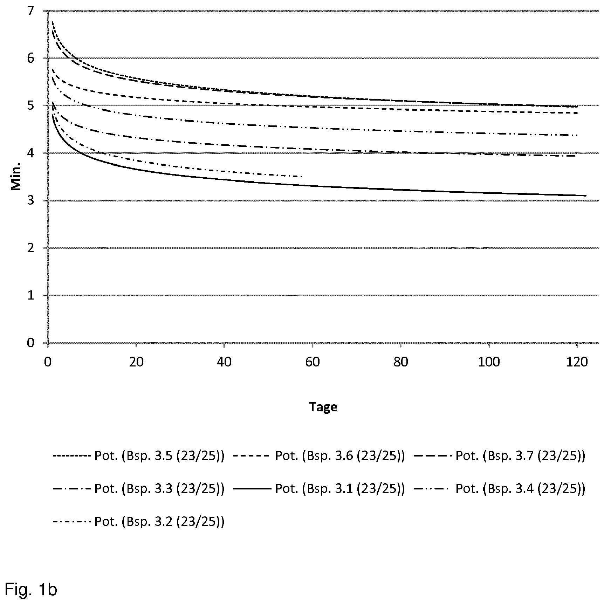

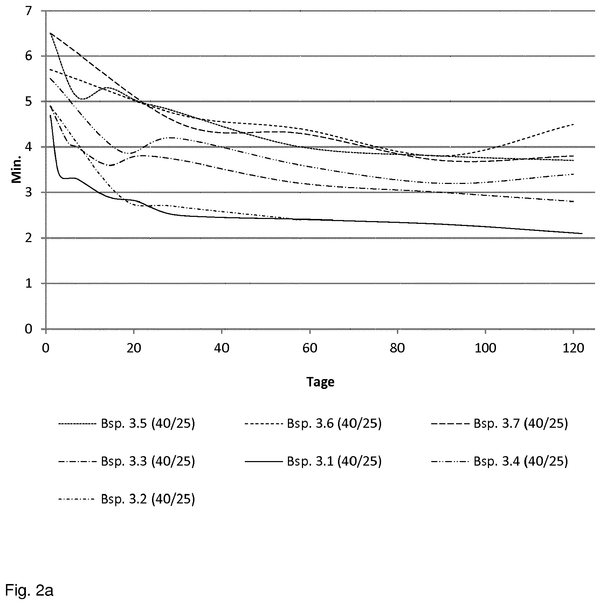

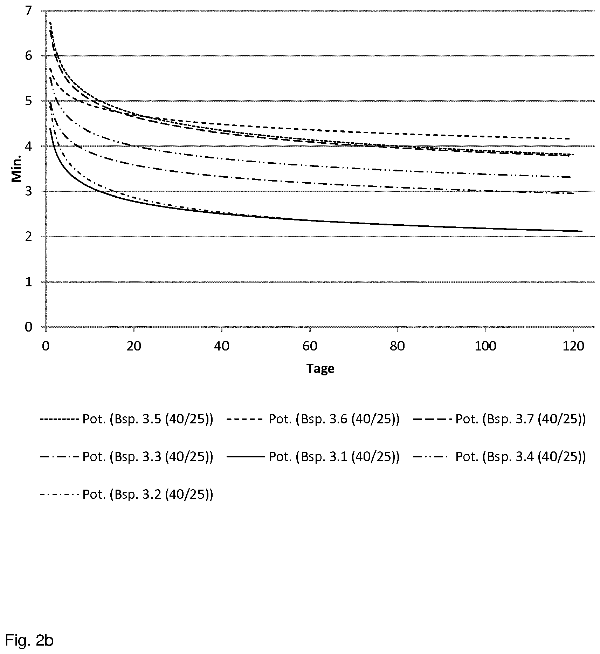

Die Unterschiede zwischen den Beispielen 3.1 bis 3.7 sind in Tabelle 4 zusammengefasst. Die Auswirkung dieser Unterschiede auf die Gelzeit ist in den Abbildungen 1 und 2 dargestellt (Fig. 1: Lagerung bei 23 °C; Fig. 2: Lagerung bei 40 °C).

**Tab. 4: Zusammenfassung der Unterschiede zwischen den Beispielen 3.1 bis 3.7**

| Beispiel | Produzierte Menge Reaktivharz [t] | Menge TEMPOL [Gew.-%] | Menge Catechol [Gew.-%] | Reaktionszeit [h] | Synthesemaximaltemperatur [°C] | Nachreaktionsdauer [h] | Mittlere Nachreaktionstemperatur [°C] |
|---|---|---|---|---|---|---|---|
| 3.1 | 4 | 0.31 | 0.15 | 0.9 | 75 | 0.75 | 70 |
| 3.2 | 0.15 | 0.275 | 0.147 | 1.17 | 75 | 8 | 60 |
| 3.3 | 10 | 0.28 | 0.148 | 2.25 | 75 | 6 | 81 |
| 3.4 | 0.15 | 0.275 | 0.147 | 1.17 | 107 | 2.5 | 95 |
| 3.5 | 5 | 0.28 | 0.148 | 1.25 | 112 | 2.5 | 105 |
| 3.6 | 10 | 0.25 | 0.146 | 2.25 | 112 | 2 | 110 |
| 3.7 | 10 | 0.25 | 0.146 | 2.25 | 112 | 2.5 | 108 |

Wie man an den Graphen in Fig. 1 und 2 erkennt, hat eine Verlängerung der Nachreaktionszeit und Erniedrigung der Nachreaktionstemperatur (Beispiel 3.2 im Vergleich zu 3.1) kaum eine Verlängerung der Gelzeit in Korrelation zur Lagerzeit zur Folge. Eine deutliche Verlängerung ist dagegen bereits bei einer Erhöhung der mittleren Nachreaktionstemperatur auf 81°C zu erkennen, wie in Beispiel 3.3 gezeigt. Erhöht man aber die Synthesemaximaltemperatur auf über 100 °C und die Nachreaktionstemperatur nochmals auf ca. 95 °C wie in Beispiel 3.4, kann man trotz massiver Verkürzung der Nachreaktionszeit und somit einer deutlich kostengünstigeren Produktion die Gelzeitdrift nochmals deutlich verbessern. Erhöht man die Synthesemaximaltemperatur, die Reaktionsdauer und die Nachreaktionstemperatur, erhält man trotz deutlich gesenkter Inhibitorkonzentration (vergleiche z.B. die Inhibitorkonzentration von Beispiel 3.7 mit 3.1) eine stark verbesserte Gelzeitdrift (Beispiele 3.6 und 3.7 im Vergleich zu den Beispielen 3.1 bis 3.5).

### Beispiel 4.1: Referenzverfahren zur Herstellung des Referenzreaktivharzes mit einer Synthesemaximaltemperatur von 80 °C

Ein Reaktivharz-Masterbatch, der ein Urethanmethactylat-Backbone-Harz enthält, wurde durch Zutropfen von 17,99 kg polymerem Diphenylmethandiisocyanat (pMDI; Desmodur VL R20 der Fa. Bayer) zu 79,36 kg HPMA (Visiomer HPMA 98 der Fa. Evonik), 34 g TEMPOL (Fa. Evonik), 8 g Phenothiazin (D Prills, Fa. Allessa) und 12 g Tegokat 216 (TIB KAT 216, Dioctylzinndilaurat der Firma TIB Chemicals) bei einer Temperatur von 75 °C unter Rühren hergestellt. Während des Zutropfens stieg die Temperatur an und wurde bis zur Beendigung der Reaktion (etwa 1,5 - 2 h; Kontrolle durch Titration der NCO-Gruppen) bei 80 °C gehalten.

Nach Beendigung der Reaktion (etwa 1,5 - 2 h) wurde der entstandene Reaktivharz-Masterbatch zur Herstellung des Reaktivharzes auf 60 °C abgekühlt und mit weiteren 74 g TEMPOL (Fa. Evonik) versetzt und 15 min gerührt. Anschließend wurden 2,5 kg Di-*iso*-propanol-*p*-toluidin (Fa. Saltigo), 834 g N-(2-Hydroxyethyl)-N-methyl-*p*-toluidin (Fa. Saltigo), 130 g *tert-*Butylbrenzcatechin (TBC 100% Schuppen, Fa. Rhodia) und 519 g Catechol (Fa. Rhodia) zugegeben und 30 min unter Rühren bei gleichbleibender Temperatur gelöst. Im Anschluss wurden 74,3 kg BDDMA (Visiomer BDDMA der Fa. Evonik) zudosiert. Der gesamte Reaktionsansatz wurde unter Rühren auf Raumtemperatur (30 °C ± 1 °C) abgekühlt.

Die Rührgeschwindigkeit wird jeweils entsprechend dem verwendeten Reaktor bzw. dem verwendeten Geräteaufbau so gewählt, dass eine möglichst maximale Durchmischung und damit ein maximaler Umsatz möglich werden.

### Beispiel 4.2: Referenzverfahren zur Herstellung des Referenzreaktivharzes mit einer Synthesemaximaltemperatur von 95 °C

Ein Reaktivharz-Masterbatch, der ein Urethanmethactylat-Backbone-Harz enthält, wurde durch Zutropfen von 17,99 kg polymeres Diphenylmethandiisocyanat (pMDI; Desmodur^{®} VL R20 der Fa. Covestro) zu 79,36 kg HPMA (Visiomer HPMA 98 der Fa. Evonik), 34 g TEMPOL (Fa. Evonik), 8 g Phenothiazin (D Prills, Allessa) und 12 g Tegokat 216 (TIB KAT^{®} 216, Dioctylzinndilaurat der Firma TIB Chemicals) bei einer Temperatur von 75 °C unter Rühren hergestellt. Während des Zutropfens und bis nach Beendigung der Reaktion (etwa 1,5 h - 2 h; Kontrolle durch Titration) wurde die Temperatur auf 95°C gehalten.

Nach Beendigung der Reaktion wurde der entstandene Reaktivharz-Masterbatch zur Herstellung des Reaktivharzes auf 60 °C abgekühlt und mit weiteren 74 g TEMPOL (Fa. Evonik) versetzt und 15 min gerührt. Anschließend wurden 2,5 kg Di-*iso*-propanol-*p-*toluidin (Fa. Saltigo), 834 g N-(2-Hydroxyethyl)-N-methyl-p-toluidin (Fa. Saltigo), 130 g *tert-*Butylbrenzcatechin (TBC 100% Schuppen, Fa. Rhodia) und 519 g Catechol (Fa. Rhodia) zugegeben und 30 min unter Rühren bei gleichbleibender Temperatur gelöst. Im Anschluss wurden 74,3 kg BDDMA (Visiomer BDDMA der Fa. Evonik) zudosiert. Der gesamte Reaktionsansatz wurde unter Rühren auf Raumtemperatur (30 °C ± 1 °C) abgekühlt.

Die Rührgeschwindigkeit wird jeweils entsprechend dem verwendeten Reaktor bzw. dem verwendeten Geräteaufbau so gewählt, dass eine möglichst maximale Durchmischung und damit ein maximaler Umsatz möglich werden.

### Beispiel 4.3: Erhöhung der Synthesemaximaltemperatur auf 100 °C

Unterschiede zum Referenzverfahren aus Beispiel 4.1 bzw. Beispiel 4.2: Erhöhung der Synthesemaximaltemperatur auf ca. 100 °C.
Ein Reaktivharz-Masterbatch, der ein Urethanmethactylat-Backbone-Harz enthält, wurde durch Zutropfen von 17,99 kg polymeres Diphenylmethandiisocyanat (pMDI; Desmodur^{®} VL R20 der Fa. Covestro) zu 79,36 kg HPMA (Visiomer HPMA 98 der Fa. Evonik), 34 g TEMPOL (Fa. Evonik), 8 g Phenothiazin (D Prills, Allessa) und 12 g Tegokat 216 (TIB KAT^{®} 216, Dioctylzinndilaurat der Firma TIB Chemicals) bei einer Temperatur von 75 °C unter Rühren hergestellt. Während des Zutropfens und bis nach Beendigung der Reaktion (etwa 1,5 h - 2 h; Kontrolle durch Titration) wurde die Temperatur auf 100°C gehalten.

Nach Beendigung der Reaktion wurde der entstandene Reaktivharz-Masterbatch zur Herstellung des Reaktivharzes auf 60 °C abgekühlt und mit weiteren 74 g TEMPOL versetzt und 15 min gerührt. Anschließend wurden 2,5 kg Di-*iso-*propanol-*p*-toluidin (Fa. Saltigo), 834 g N-(2-Hydroxyethyl)-N-methyl-p-toluidin (Fa. Saltigo), 130 g *tert-*Butylbrenzcatechin (TBC 100% Schuppen, Fa. Rhodia) und 519 g Catechol (Fa. Rhodia) zugegeben und 30 min unter Rühren bei gleichbleibender Temperatur gelöst. Im Anschluss wurden 74,3 kg BDDMA (Visiomer BDDMA der Fa. Evonik) zudosiert. Der gesamte Reaktionsansatz wurde unter Rühren auf Raumtemperatur (30 °C ± 1 °C) abgekühlt.

Die Rührgeschwindigkeit wird jeweils entsprechend dem verwendeten Reaktor bzw. dem verwendeten Geräteaufbau so gewählt, dass eine möglichst maximale Durchmischung und damit ein maximaler Umsatz möglich werden.

### Beispiel 4.4: Erhöhung der Synthesemaximaltemperatur auf 110 °C

Unterschiede zum Referenzverfahren aus Beispiel 4.1 bzw. Beispiel 4.2: Erhöhung der Synthesemaximaltemperatur auf ca. 110 °C.
Ein Reaktivharz-Masterbatch, der ein Urethanmethactylat-Backbone-Harz enthält, wurde durch Zutropfen von 17,99 kg polymeres Diphenylmethandiisocyanat (pMDI; Desmodur^{®} VL R20 der Fa. Covestro) zu 79,36 kg HPMA (Visiomer HPMA 98 der Fa. Evonik), 34 g TEMPOL (Fa. Evonik), 8 g Phenothiazin (D Prills, Allessa) und 12 g Tegokat 216 (TIB KAT^{®} 216, Dioctylzinndilaurat der Firma TIB Chemicals) bei einer Temperatur von 75 °C unter Rühren hergestellt. Während des Zutropfens und bis nach Beendigung der Reaktion (etwa 1,5 h - 2 h; Kontrolle durch Titration) wurde die Temperatur auf 110°C gehalten.

Nach Beendigung der Reaktion wurde der entstandene Reaktivharz-Masterbatch zur Herstellung des Reaktivharzes auf 60 °C abgekühlt und mit weiteren 74 g TEMPOL versetzt und 15 min gerührt. Anschließend wurden 2,5 kg Di-*iso-*propanol-*p*-toluidin (Fa. Saltigo), 834 g N-(2-Hydroxyethyl)-N-methyl-p-toluidin (Fa. Saltigo), 130 g *tert-*Butylbrenzcatechin (TBC 100% Schuppen, Fa. Rhodia) und 519 g Catechol (Fa. Rhodia) zugegeben und 30 min unter Rühren bei gleichbleibender Temperatur gelöst. Im Anschluss wurden 74,3 kg BDDMA (Visiomer BDDMA der Fa. Evonik) zudosiert. Der gesamte Reaktionsansatz wurde unter Rühren auf Raumtemperatur (30 °C ± 1 °C) abgekühlt.

Die Rührgeschwindigkeit wird jeweils entsprechend dem verwendeten Reaktor bzw. dem verwendeten Geräteaufbau so gewählt, dass eine möglichst maximale Durchmischung und damit ein maximaler Umsatz möglich werden.

### Beispiel 4.5: Erhöhung der Synthesemaximaltemperatur auf 120 °C

Unterschiede zum Referenzverfahren aus Beispiel 4.1: Erhöhung der Synthesemaximaltemperatur auf ca. 120 °C.
Ein Reaktivharz-Masterbatch, der ein Urethanmethactylat-Backbone-Harz enthält, wurde durch Zutropfen von 17,99 kg polymeres Diphenylmethandiisocyanat (pMDI; Desmodur^{®} VL R20 der Fa. Covestro) zu 79,36 kg HPMA (Visiomer HPMA 98 der Fa. Evonik), 34 g TEMPOL (Evonik), 8 g Phenothiazin (D Prills, Allessa) und 12 g Tegokat 216 (TIB KAT^{®} 216, Dioctylzinndilaurat der Firma TIB Chemicals) bei einer Temperatur von 75 °C unter Rühren hergestellt. Während des Zutropfens und bis nach Beendigung der Reaktion (etwa 1,5 h - 2 h; Kontrolle durch Titration) wurde die Temperatur auf 120°C gehalten.

Nach Beendigung der Reaktion wurde der entstandene Reaktivharz-Masterbatch zur Herstellung des Reaktivharzes auf 60 °C abgekühlt und mit weiteren 74 g TEMPOL versetzt und 15 min gerührt. Anschließend wurden 2,5 kg Di-*iso-*propanol-*p*-toluidin (Fa. Saltigo), 834 g N-(2-Hydroxyethyl)-N-methyl-p-toluidin (Fa. Saltigo), 130 g *tert-*Butylbrenzcatechin (TBC 100% Schuppen, Fa. Rhodia) und 519 g Catechol (Fa. Rhodia) zugegeben und 30 min unter Rühren bei gleichbleibender Temperatur gelöst. Im Anschluss wurden 74,3 kg BDDMA (Visiomer BDDMA der Fa. Evonik) zudosiert. Der gesamte Reaktionsansatz wurde unter Rühren auf Raumtemperatur (30 °C ± 1 °C) abgekühlt.

Die Rührgeschwindigkeit wird jeweils entsprechend dem verwendeten Reaktor bzw. dem verwendeten Geräteaufbau so gewählt, dass eine möglichst maximale Durchmischung und damit ein maximaler Umsatz möglich werden.

### Beispiel 4.6: Weiterverarbeitung der Reaktivharze zu den Reaktivharzkomponenten 4.6 bis 4.10

Jedes der in den Beispielen 4.1 bis 4.5 hergestellten Reaktivharze (jeweils zu 43 Gew.-%) wurde mit Sand (Strobel; P10, 36 Gew.-%), Zement (Kerneos Inc.; Secar 80, 18 Gew.-%) und pyrogener Kieselsäure (Cabot, TS-720, 3 Gew.-%) zu einer thixotropen Reaktivharzkomponente homogenisiert, wodurch die Reaktivharzkomponente 4.6 (aus Reaktivharz 4.1), 4.7 (aus Reaktivharz 4.2), 4.8 (aus Reaktivharz 4.3), 4.9 (aus Reaktivharz 4.4) und 4.10 (aus Reaktivharz 4.5) erhalten wurden.

### Bestimmung der Lagerstabilität

Es wurde die Lagerstabilität der Reaktivharze aus den Beispielen 4.1 bis 4.5 und der Reaktivharzkomponenten 4.6 bis 4.10 bestimmt. Zur Bestimmung der Lagerstabilität wurden jeweils 20 ml der in den Beispielen 4.1 bis 4.5 hergestellten Reaktivharze und der in Beispielen 4.6 hergestellten Reaktivharzkomponenten 4.6 bis 4.10 in mit Aluminium beschichteter, sauerstoffdichter Folie (Dimension: 12x5cm) gefüllt und die Folie versiegelt, wobei möglichst wenig Luft in der Folie verblieb. Die Folien wurden jeweils bei 80°C gelagert.

Die Ermittlung der Lagerstabilität erfolgte über die Zeit, bis zu der die Proben begannen zu Gelieren. Dies wurde haptisch ermittelt, in dem die Proben täglich befühlt und gedrückt wurden, um deren Konsistenz zu beurteilen.

Als Vergleich dienten jeweils ein in Folien abgefülltes frisch hergestelltes Reaktivharz und eine in Folie abgefüllte frisch hergestellte Reaktivharzkomponente, deren Haptik als flüssig definiert wurde. Beide Folien werden bei Raumtemperatur gelagert und wurden bei der Beurteilung der Haptik der bei 80 °C gelagerten Folien zu jeder Beurteilung als Vergleich herangezogen. Diese befüllten Folien werden auch als Vergleichsfolien bezeichnet.

Die Reaktivharze und Reaktivharzkomponenten gelten so lange als lagerstabil, wie sich die Haptik der Folien nach der Lagerung über einen bestimmten Zeitraum bei 80 °C nicht von denen der Vergleichsfolien unterschied. Der Zeitpunkt der Gelierung wird als der Zeitpunkt definiert, zum dem sich die Haptik der Folien merklich ändert, d.h. der Inhalt der Folien sich nicht mehr flüssig anfühlte. Bei den Folien, die mit den Reaktivharzen befüllt waren äußert sich die Gelierung in einem deutlichen Anstieg der Viskosität, was dazu führte, dass sich der Inhalt der Folien marmeladen- oder honigartig anfühlte. Bei den Folien, die mit den Reaktivharzkomponenten befüllt waren, äußert sich dies in einem Erstarren/Erhärten der Zusammensetzung, die sich nahezu fest anfühlte.

War die Bestimmung nicht eindeutig, wurden die Folienbeutel geöffnet und visuell oder über eine Viskositätsmessung deren Zustand (flüssig oder geliert) beurteilt. Die Ergebnisse sind in Tabelle 5 zusammengefasst.

**Tab. 5: Ergebnisse der Bestimmung der Lagerstabilität von Reaktivharzen und Reaktivharzkomponenten bei unterschiedlichen Synthesemaximaltemperaturen**

| **Synthesetemperatur, °C** | **80** | **95** | **100** | **110** | **120** |
|---|---|---|---|---|---|
| | | | | | |
| Reaktivharz | 4.1 | 4.2 | 4.3 | 4.4 | 4.5 |
| Lagerung h bei 80°C bis zur Gelierung | 31 - 47 | 169 - 184 | > 300 | > 300 | > 300 |
| | | | | | |
| Reaktivharzkomponente | 4.6 | 4.7 | 4.8 | 4.9 | 4.10 |
| Lagerung h bei 80°C bis zur Gelierung | 31 - 47 | > 300 | > 300 | > 300 | > 300 |

Wie man an den Daten sehen kann, hat eine erhöhte Synthesemaximaltemperatur einen deutlichen Einfluss auf die Lagerstabilität sowohl der Reaktivharze als auch der daraus hergestellten Reaktivharzkomponenten. Die Erhöhung der Synthesemaximaltemperatur von 80 °C auf 100 °C führte zu einer deutlichen Erhöhung der Lagerstabilität des Reaktivharzes und der Reaktivharzkomponente, wobei die Beurteilung jeweils nach 300 Stunden (13 Tage) abgebrochen wurde. Diese Ergebnisse zeigen, dass bereits alleine die Erhöhung der Synthesemaximaltemperatur auf mindestens 100 °C ohne eine zusätzliche Nachreaktion zu einer deutlichen Verbesserung der Lagerstabilität eines Reaktivharzes und einer daraus hergestellten Reaktivharzkomponente führt.

### KURZE BESCHREIBUNG DER ABBILDUNGEN

Fig. 1a zeigt die in Beispiel 3.8 ermittelten Gelzeitmesswerte tₘ,₂₅→35°C nach Lagerung bei 23°C, aufgetragen gegen die Lagerdauer in Tagen. Die inhärente Streuung der Messapparatur führt zu streuenden Werten und damit zu der gezeigten Wellenform der Kurven. Fig. 1b zeigt die entsprechenden Ausgleichskurven zu den Kurven aus Fig. 1a, um den Verlauf der Kurven aus Fig. 1a deutlicher zu machen. Legende Fig. 1a und b: "Pot." = Ausgleichskurve; "23/25" = 23°C Lagerungstemperatur, 25°C Ausgangstemperatur der Gelzeitmessung; Min. = Gelzeit in Minuten; Tage = Lagerdauer in Tagen.

Fig. 2a zeigt die in Beispiel 3.8 ermittelten Gelzeitmesswerte t_{m,25}→35°C nach Lagerung bei 40°C, aufgetragen gegen die Lagerdauer in Tagen. Auch hier bedingt die inhärente Streuung der Messapparatur streuende Werte und damit eine Wellenform der Kurven. Fig. 2b zeigt die entsprechenden Ausgleichskurven zu den Kurven aus Fig. 2a, um den Verlauf der Kurven aus Fig. 2a deutlicher zu machen. Legende Fig. 2a und b: "plot." = Ausgleichskurve; "40/25" = 40°C Lagerungstemperatur, 25°C Ausgangstemperatur der Gelzeitmessung; Min. = Gelzeit in Minuten; Tage = Lagerdauer in Tagen.

## Patentansprüche

1. Verfahren zur Herstellung eines Reaktivharzes, das Verfahren umfassend die Schritte:
(a) Herstellung mindestens eines Backbone-Harzes, welches ein Urethan(meth)acrylatharz ist, aus mindestens einem Isocyanat, welches pMDI ist, und mindestens einem hydroxyfunktionalisierten (Meth)acrylat über einen Zeitraum t1 bei einer Temperatur T1; direkt anschließend an den Abschluss der Reaktion zum Backbone-Harz dann
(b)Rühren des aus Schritt (a) resultierenden Reaktivharz-Masterbatches enthaltend das Backbone-Harz über einen Zeitraum t2 bei einer Temperatur T2;
(c)nach Abschluss des Zeitraums t2 Zugabe von mindestens einem Inhibitor, wobei der mindestens eine Inhibitor ein Piperidinyl-*N*-oxyl oder ein Tetrahydropyrrol-*N*-oxyl oder eine Mischung daraus ist, und wobei die Zugabe des mindestens einen Inhibitors entweder (i) direkt nach Abschluss des Zeitraums t2 bei der Temperatur T2 oder (ii) nach Abkühlen der aus Schritt (b) resultierenden Mischung auf eine Temperatur T3 nach Ablauf eines Zeitraums t3 beginnend mit dem Ende des Zeitraums t2 erfolgt; und
(d) Zugabe von mindestens einem Beschleuniger und optional mindestens einem Reaktivverdünner vor, gleichzeitig mit, oder nach der Zugabe des Inhibitors, um das Reaktivharz zu erhalten.

2. Das Verfahren gemäß Anspruch 1, in welchem der mindestens eine Inhibitor 4-Hydroxy-2,2,6,6-tetramethylpiperidin-*N*-oxyl (TEMPOL) ist.

3. Das Verfahren gemäß Anspruch 1 oder Anspruch 2, in welchem das hydroxyfunktionalisierte (Meth)acrylat ein hydroxyfunktionalisiertes Methacrylat ist und das Urethan(meth)acrylatharz ein Urethanmethacrylatharz ist.

4. Das Verfahren gemäß Anspruch 3, in welchem das hydroxyfunktionalisierte Methacrylat ausgewählt ist aus der Gruppe bestehend aus Hydroxyethylmethacrylat, 2-Hydroxypropylmethacrylat, 3-Hydroxypropylmethacrylat, 2-Hydroxybutylmethacrylat, 3-Hydroxybutylmethacrylat, 2-Hydroxycyclohexylmethacrylat, Glycerol-1,3-dimethacrylat, Glycerolmethacrylat, und Gemischen aus zwei oder mehreren dieser Verbindungen.

5. Das Verfahren gemäß Anspruch 4, in welchem das hydroxyfunktionalisierte Methacrylat ausgewählt ist aus der Gruppe bestehend aus 2-Hydroxypropylmethacrylat, 3-Hydroxypropylmethacrylat und einer Mischung aus 2- und 3-Hydroxypropylmethacrylat.

6. Das Verfahren gemäß irgendeinem der Ansprüche 1 bis 5, in welchem T2 von etwa 100°C bis etwa 120°C beträgt.

7. Das Verfahren gemäß irgendeinem der Ansprüche 1 bis 6, in welchem t2 von etwa 1,5 h bis etwa 3 h ist.

8. Das Verfahren gemäß irgendeinem der Ansprüche 1 bis 7, in welchem das Produkt von t2 multipliziert mit T2, ausgedrückt in h mal °C (h°C), von 200 bis 300 h°C beträgt.

9. Reaktivharz, hergestellt nach dem Verfahren gemäß irgendeinem der Ansprüche 1 bis 8.

10. Reaktivharzkomponente (A) für ein Reaktivharz-System, enthaltend ein Reaktivharz gemäß Anspruch 9.

11. Reaktivharz-System mit einer Reaktivharzkomponente (A) gemäß Anspruch 10, und einer Härterkomponente (B), die einen Initiator enthält.

12. Reaktivharz-System nach Anspruch 11, wobei mindestens eine der Komponenten (A) oder (B) einen anorganischen Füllstoff enthält.

13. Reaktivharz-System nach einem der Ansprüche 11 oder 12, wobei die Reaktivharzkomponente (A) enthält:
- mindestens ein wie in Ansprüchen 1 bis 4 definiertes Urethan(meth)acrylat aus mindestens einem hydroxyfunktionalisierten (Meth)acrylat und pMDI;
- mindestens einen Reaktivverdünner;
- mindestens einen Beschleuniger;
- mindestens TEMPOL als Inhibitor vom Typ Piperidinyl-*N*-oxyl oder Tetrahydropyrrol-*N*-oxyl;
- mindestens eine hydraulisch abbindende oder polykondensierbare anorganische Verbindung; und
- mindestens ein Thixotropiermittel,
und die Härterkomponente (B) enthält:
- mindestens einen Initiator für das mindestens eine Urethan(meth)acrylat;
- mindestens einen Füllstoff; und
- Wasser.

14. Reaktivharz-System nach einem der Ansprüche 11 oder 12, wobei die Reaktivharzkomponente (A) enthält:
- mindestens ein wie oben definiertes Urethan(meth)acrylat;
- TEMPOL;
- Di-*iso*-propanol-*p*-toluidin;
- mindestens einen weiteren Inhibitor, der ausgewählt ist aus der Gruppe besteht aus Catecholen und Phenothiazinen;
- Zement;
- pyrogene Kieselsäure; und
- Quarzsand,
und die Härterkomponente (B) enthält:
- mindestens einen Initiator für die Initiierung der Polymerisation des Urethan(meth)acrylats;
- pyrogene Kieselsäure;
- Quarzsand; und
- Wasser.

15. Verwendung eines Reaktivharz-Systems nach einem der Ansprüche 11 bis 14 zur chemischen Befestigung von Verankerungsmitteln in Bohrlöchern oder zum baulichen Kleben.
